(19) Europäisches Patentamt
European Patent Office
Office européen des brevets

(11) **EP 2 094 004 B1**

(12) **EUROPÄISCHE PATENTSCHRIFT**

(45) Veröffentlichungstag und Bekanntmachung des Hinweises auf die Patenterteilung:
**06.10.2010 Patentblatt 2010/40**

(51) Int Cl.:
***H04N 5/335*** *(2006.01)*    ***H04N 3/15*** *(2006.01)*

(21) Anmeldenummer: **09450040.2**

(22) Anmeldetag: **20.02.2009**

(54) **Schaltung zur Integration von Pixelsignalwerten**

Switching mechanism for integrating pixel signal values

Commutation destiné à l'intégration de valeurs de signaux de pixel

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.02.2008 AT 2782008**

(43) Veröffentlichungstag der Anmeldung:
**26.08.2009 Patentblatt 2009/35**

(73) Patentinhaber: **Austrian Research Centers GmbH-ARC**
**1220 Wien (AT)**

(72) Erfinder:
• **Bodenstorfer, Ernst**
**2345 Brunn am Gebirge (AT)**
• **Mayer, Konrad**
**1230 Wien (AT)**
• **Heiss, Dorothea**
**1230 Wien (AT)**
• **Fürtler, Johannes**
**3601 Dürnstein (AT)**

(74) Vertreter: **Wildhack & Jellinek Patentanwälte**
**Landstraßer Hauptstraße 50**
**1030 Wien (AT)**

(56) Entgegenhaltungen:
**EP-A- 0 776 124**      **US-A- 5 960 097**
**US-A1- 2001 002 848**     **US-A1- 2007 064 135**
**US-A1- 2008 079 830**

• **LEPAGE G ET AL: "CMOS long linear array for space application" SENSORS, CAMERAS AND SYSTEMS FOR SCIENTIFIC/INDUSTRIAL APPLICATIONS VII. PROCEEDINGS OF SPIE-IS&T ELECTRONIC IMAGING, SPIE, US, vol. 6068, 1 January 2006 (2006-01-01), pages 606807-1, XP007912764**

**Beschreibung**

Die Erfindung betrifft eine Schaltung gemäß dem Oberbegriff des Anspruches 1.

Als Schaltung wird in diesem Zusammenhang jede festverdrahtete oder programmierte Analog- oder Digitalschaltung verstanden, welche entweder als Verschaltung mehrerer Bauteile oder als integrierte Schaltung gefertigt sein kann.

Als Bildsensoren werden gleichermaßen Flächensensoren und Zeilensensoren verstanden, auf welchen einzelne Pixel nebeneinander oder aber auf einer Fläche angeordnet sind.

Erfindungsgemäße Schaltungen können insbesondere für die Bildaufnahme, vorzugsweise für eine automatisierte Überwachung bewegter Gegenstände, verwendet werden.

Eine große Herausforderung bei Hochgeschwindigkeitszeilenkameras stellt die kurze zur Verfügung stehende Belichtungszeit dar, die zu geringen Signalpegeln führt, da die Stärke der Beleuchtung fertigungsbedingt begrenzt ist. Ein wichtiges Design-Ziel einer Hochgeschwindigkeitszeilenkamera ist daher, das Bildrauschen möglichst klein zu halten, damit die Bildqualität auch bei den kleinen zur Verfügung stehenden Lichtmengen einigermaßen erhalten bleibt. Eine typische Anwendung von Hochgeschwindigkeitszeilenkameras stellt die optische Qualitätsinspektion bei industriellen Produktionsprozessen dar. Solche Anwendungen fordern im Allgemeinen einerseits einen möglichst hohen Durchsatz und andererseits eine möglichst feine Auflösung. Beide Forderungen zielen auf eine möglichst hohe Abtastrate der Zeilen oder Zeilenrate der Kamera ab. Der Möglichkeit, die Lichtintensität der Beleuchtung zu steigern, sind im Allgemeinen leider Grenzen gesetzt, sodass die Verkürzung der Belichtungszeit bei Hochgeschwindigkeitskameras oft nicht durch eine stärkere Beleuchtung kompensiert werden kann.

Zur Aufnahme von Gegenständen, welche gegenüber der Bildaufnahmeeinheit eine weitestgehend gleichmäßige Relativbewegung vollführen, wird vorzugsweise das TDI-Verfahren angewendet. Bei diesem Verfahren werden Pixelsignalwerte, welche denselben Gegenstandsbereich darstellen, jedoch zu unterschiedlichen Zeiten und mit unterschiedlichen Pixeln aufgenommen worden sind, akkumuliert bzw. zeitlich integriert. Somit ist es möglich, bewegte Gegenstände mit einer relativ geringen Anzahl von Bildzeilen aufzunehmen und entsprechende verzerrungsfreie Bilder zu erhalten.

Ferner ist für die Aufnahme unbewegter Bilder nach dem Stand der Technik eine Rauschkompensation (CDS) vorgesehen. Durch Messung eines entsprechenden Pixel-Signals vor und nach der Belichtung kann der rauschbedingte Fehler weitestgehend eliminiert bzw. herausgerechnet werden.

Ein Ansatz nach dem Stand der Technik besteht darin, die Responsivität der lichtempfindlichen Elemente des Bildsensors so groß wie möglich zu machen, damit bereits ein kleines Lichteingangssignal umgesetzt wird in ein möglichst großes elektrisches Signal. Damit wirken sich alle Störeffekte in der nachgeschalteten elektrischen Signalverarbeitung (Rauschen, Einkopplungen, Nichtlinearitäten, ...) prozentuell weniger stark auf das Sensorausgangssignal aus. Oder anders ausgedrückt, die bis zu einem gewissen Grade unvermeidlichen Störsignale in der Signalverarbeitung entsprechen - auf den Sensor-Eingang rückgerechnet - einer kleineren Lichtmenge. Dadurch wird der Sensor "empfindlicher", wodurch kleinere Lichtmengen vom Rauschen unterschieden werden können. Der Nachteil dieses Ansatzes besteht darin, dass eine Steigerung der Responsivität meist nur durch Wahl einer anderen Halbleiterfertigungstechnologie möglich ist, was oft zu teuer ist (z.B. ein rückseitenbeleuchteter Prozess).

Weitere Ansätze, das eingangsbezogene Rauschen zu reduzieren, zielen direkt auf das Rauschen ab. Zumeist wird versucht, den dominanten Rauschterm zu reduzieren.

Bei langen Belichtungszeiten ist das oft das Dunkelstromrauschen, weshalb Sensoren für Kameras mit langen Belichtungszeiten oft stark unter die Umgebungstemperatur gekühlt werden (das Dunkelstromrauschen steigt mit der Temperatur sehr stark an). Bei Hochgeschwindigkeitskameras spielt das Dunkelstromrauschen wegen der kurzen Belichtungszeit meist nur eine untergeordnete Rolle.

Bei kurzen Belichtungszeiten stellt sich in vielen Fällen das thermische Rauschen des Reset-Transistors als dominanter Rauschterm heraus. Dieser Rauschterm lässt sich fast vollständig mit dem Correlated Double Sampling (CDS) Verfahren eliminieren. Das thermische Rauschen des Reset-Transistors verfälscht den Startwert der Spannung an der Photodiode am Beginn der Belichtung durch einen statistischen Fehler, der aber für die Zeitdauer der Belichtung eingefroren wird, wodurch auch die Spannung an der Photodiode am Ende der Belichtung um denselben Fehlerbetrag verfälscht ist. Durch das CDS- Verfahren wird bereits der Startwert der Spannung und damit der statistische Fehler erfasst. Dieser kann am Ende der Belichtung vom Spannungsendwert subtrahiert werden. Dadurch wird das thermische Rauschen während des Rücksetzvorgangs für die nachfolgenden Signalverarbeitungsstufen eliminiert. Weiters werden alle niederfrequenten Störquellen vor der CDS-Schaltung unterdrückt und konstante Offsetfehler sogar bis zu 100% unterdrückt. Das CDS Verfahren hat allerdings den Nachteil, dass die Startwerte der Pixelspannungen ausgelesen und über die gesamte Belichtungszeit gespeichert werden müssen, wofür für jedes Pixel ein separates Speicherelement notwendig ist. Das hat dazu geführt, dass CDS- Flächensensoren teuer sind und daher selten angewendet werden.

Eine Methode, welche bei Zeilen- und Flächensensoren Anwendung findet ist Time Delay Integration (TDI), welche die translatorische Bewegung des Objektes ausnützt, indem jeder Objektpunkt mehrfach aufgenommen wird, was einer Verlängerung der Belichtungszeit gleichkommt. Dadurch werden sowohl die Signalstärke, als auch das Rauschen erhöht. Der Gewinn besteht darin, dass durch die Akkumulation das Signal im Verhältnis zum Rauschen stärker ansteigt. TDI ist somit eine weitere bekannte Methode zur Verringerung des eingangsbezogenen Rauschens, die bevorzugt im Bereich der industriellen Bildverarbeitung verwendet wird. Besonders geeignet ist diese Methode für die Erfassung schnell bewegter Objekte, die mit hoher Auflösung aufgezeichnet werden müssen. Hervorragend einsetzbar ist TDI auch bei geringen Lichtverhältnissen. Im TDI-Modus erfassen Bildsensoren klare Bilder sich schnell bewegender Objekte, indem die gespeicherten Helligkeitswerte mehrerer Zeilen aufakkumuliert werden. Wenn sich in einem Aufnahmetakt eine Gegenstandszeile um genau eine Sensorzeile weiterbewegt, so kann jede Gegenstandszeile in aufeinander folgenden Aufnahmetakten mehrfach aufgenommen werden. Werden in jedem Aufnahmetakt beispielsweise 128 Zeilen aufgenommen, so wird jede Gegenstandszeile in 128 aufeinanderfolgenden Aufnahmetakten insgesamt 128 Mal aufgenommen, und das führt zu einer etwa 128 Mal höheren Signalstärke als dies bei herkömmlichen Sensoren der Fall ist.

Aus dem Stand der Technik ist insbesondere die Veröffentlichung "CMOS Long Linear Array for Space Application" bekannt. Hier wird ein qualitativ hochwertiges Bildaufnahmeverfahren beschrieben, das mit CMOS-Sensoren funktioniert. Insbesondere wird dabei klargestellt, dass CMOS-Transistoren trotz ihres großen Rauschens gegenüber CCD in der Bildgebung Verwendung finden können. Es wird ein lineares CMOS-Array dargestellt, mit dem ein TDI-Verfahren mit gleichzeitiger Rausch-Aufsetzkorrektur durchgeführt wird (CDS).

Die Aufgabe der Erfindung besteht darin, eine Schaltung insbesondere für Flächensensoren von Bildaufnahmeeinrichtungen, vorzugsweise Kameras, zu entwickeln, welche die Vorteile der Zeitintegration einzelner Pixelsignalwerte (TDI) sowie der Rauschkompensation (CDS) vereinigen. Weiters soll der Aufbau der Schaltung möglichst wenig Leistung und Chipfläche verbrauchen, um den, insbesondere auf dem Trägersubstrat des Chips befindlichen, verbleibenden Platz für die fotoempfindlichen Dioden der einzelnen Pixel frei zu halten. Der Schaltungsaufbau sollte ferner möglichst fehlertolerant mit geringer Ausschussrate produzierbar sein und vorzugsweise mit konventionellen mikroelektronischen Fertigungsmechanismen auskommen, z.B. mit einem CMOS-Prozess fertigbar sein. Derartige Schaltungen werden vorteilhafterweise in Bildsensoren eingesetzt, welche ihrerseits für Bildaufnahmeeinheiten eingesetzt werden.

Die Erfindung löst diese Aufgabe mit bei einer Schaltung der eingangs genannten Art mit den im Kennzeichen des Anspruches 1 angeführten Merkmalen.

Mit den Merkmalen des erfindungsgemäßen Verfahrens können die Zeitintegration TDI einzelner Pixelsignalwerte sowie eine Rauschkompensation CDS gleichzeitig vorgenommen werden. Ein derartiges Verfahren ist einfach zu implementieren, wobei die vom Verfahren benötigte Zeit zur Durchführung etwa der Zeit zur Durchführung eines konventionellen TDI-Verfahrens entspricht. Der Vorteil besteht ferner darin, dass durch die Kombination von CDS und TDI eine besonders effiziente Reduktion des Rauschens möglich ist. Jedes einzelne Verfahren für sich kann das Rauschen nur in einem begrenzten Maße sinnvoll reduzieren. Da CDS gezielt das Reset-Rauschen eliminiert, ist der Gewinn von CDS abhängig vom Anteil des Reset-Rauschens am Gesamtrauschen und umso größer, je größer dieser Anteil ist. Die Möglichkeiten von CDS sind damit aber limitiert. Etwas anders verhält es sich bei TDI, das das eingangsbezogene Rauschen proportional zur Wurzel der Anzahl der TDI-Stufen verringert. Damit kann zwar theoretisch das Rauschen beliebig klein gemacht werden, allerdings nur mit hohem Aufwand. Ein Rechenbeispiel mit der Annahme, dass durch CDS das Rauschen halbiert werden kann: TDI mit N Akkumulationen und CDS reduziert das Rauschen auf $\dfrac{1}{2\sqrt{N}}$ des Wertes ohne TDI und ohne CDS. TDI mit 2 N Akkumulationen, dafür kein CDS, reduziert das Rauschen auf $\dfrac{1}{\sqrt{2N}}$ des Wertes ohne TDI und ohne CDS, was um den Faktor Wurzel aus 2 mehr (ungünstiger) ist. Folglich erreicht man mit der Kombination von CDS und TDI bei gleichem Aufwand ein besseres Rauschverhalten.

Erfindungsgemäß ist eine Schaltung zur Auswertung von an einer Reihe, insbesondere einer Spalte eines Bildsensors, von Pixeln anliegenden Helligkeitssignalen, wobei jedes der an den einzelnen Pixeln anliegenden Helligkeitssignale gesondert auf einen vorgegebenen Wert rücksetzbar ist, vorgesehen, wobei eine Auswahlschaltung umfassend eine Anzahl von Eingängen und eine Anzahl von Ausgängen vorgesehen ist, mittels welcher einstellbar ist, welcher der Eingänge mit welchem der Ausgänge verbunden ist, dass jedes Pixel an einen der Eingänge der Auswahlschaltung angeschlossen ist, dass jedes Akkumulatorelement einem der Ausgänge der Auswahlschaltung zur Akkumulation eines dem Helligkeitssignal eines Pixels entsprechenden Werts nachgeschaltet ist, und dass eine Steuerschaltung an die jeweiligen Steuereingänge der Auswahlschaltung der Akkumulatorelemente und der Pixel angeschlossen ist, und diese von der Steuerschaltung steuerbar sind. Die Erfindung sieht vor, dass zumindest eines der Akkumulatorelemente als Analogschaltung aufgebaut oder realisiert ist, welche einen Operationsverstärker, zwei Kondensatoren, sowie vier Schalter umfasst, wobei der Eingang der Schaltung mit dem ersten Anschluss des ersten Schalters verbunden ist, der zweite Anschluss des ersten Schalters mit dem ersten Anschluss des ersten Kondensators verbunden ist, der zweite Anschluss des ersten Kondensators mit dem ersten Anschluss des zweiten Kondensators verbunden ist, der zweite Anschluss des zweiten Kondensators mit dem ersten Anschluss des zweiten Schalters sowie mit dem ersten Anschluss des dritten Schalters verbunden ist, der zweite Anschluss des dritten Schalters auf Massepotential liegt, der zweite Anschluss des zweiten Schalters mit dem Ausgang der Analogschaltung verbunden ist, der nicht-invertierende Eingang des Operationsverstärkers auf Massepotential liegt, der invertierende Eingang des Operationsverstärkers mit dem zweiten Anschluss des ersten Kondensators verbunden ist, der Ausgang des Operationsverstärkers mit dem Ausgang der Analogschaltung verbunden ist, und der vierte Schalter an je einem seiner Anschlüsse mit dem invertierenden Eingang des Operationsverstärkers sowie mit dem Ausgang des Operationsverstärkers verbunden ist.

Hierdurch wird einerseits die Anzahl der benötigten Leitungen reduziert und andererseits beschreiben diese Merkmale einen besonders einfachen Aufbau einer Auswahlschaltung. Es wird eine verbesserte Aufteilung und Nutzung der Chipfläche erreicht sowie lange Zuleitungen mit parasitären Kapazitäten vermieden. Ferner können für die Zeitintegration der gemessenen Pixelsignalwerte digitale Schaltungen verwendet werden. Das kann insbesondere bei niedrigen Zeilenfrequenzen ein Vorteil sein, wenn die analoge Speicherung von Signalwerten, z.B. wegen Leckströmen von Kondensatoren, nicht mehr möglich ist.

Vorteilhafterweise kann das Ausgangssignal der Schaltung von einer Digitalschaltung weiterverarbeitet werden und allenfalls vereinfacht sich der Aufbau der Schaltung für die einzelnen Pixel, wodurch ein Transistor pro Pixel eingespart wird.

Es wird ferner erreicht, dass die Steuerschaltung besonders einfach, insbesondere durch eine Allzweck-Digitalschaltung, realisiert werden kann. Vorteilhafterweise kann vorgesehen sein, dass die einzelnen Ausgänge der jeweiligen Akkumulatorelemente an die Eingänge eines Multiplexers angeschlossen sind, wobei die Steuerschaltung an den Steuereingang des Multiplexers angeschlossen ist und diesen steuert, und wobei der Ausgang des Multiplexers den Ausgang der Schaltung bildet und/oder dass in der Auswahlschaltung bei Vorliegen eines Steuersignals an einem dafür vorgesehenen Steuereingang genau ein Eingang mit genau einem Ausgang entsprechend der im Steuersignal enthaltenen Information verbunden wird und alle anderen Eingänge und Ausgänge unverbunden bzw. gegenüber einander isoliert sind.

Hierdurch werden besonders vorteilhafte Ausführungsformen der Akkumulatorelemente beschrieben.

Ein weiterer vorteilhafter Aspekt der Erfindung sieht vor, dass jedes der Akkumulatorelemente einen Steuereingang, gegebenenfalls für mehrere anliegende binär codierte Steuerinformationen, aufweist, über welche mittels der Steuerschaltung vorgegeben wird, ob das am Eingang des Akkumulatorelements anliegende Eingangssignal nicht beachtet wird und der Akkumulatorwert beibehalten wird oder den Akkumulatorwert überschreibt, wobei der negative Wert des Eingangssignals im Akkumulatorelement abgespeichert wird oder dem Akkumulatorwert hinzuaddiert wird oder vom Akkumulatorwert abgezogen wird oder den Akkumulatorwert überschreibt, und/oder dass jedes der Akkumulatorelemente einen Steuereingang, gegebenenfalls für mehrere anliegende binär codierte Steuerinformationen, aufweist, über welche mittels der Steuerschaltung vorgegeben wird, ob das am Eingang des Akkumulatorelements anliegende Eingangssignal nicht beachtet wird und der Akkumulatorwert beibehalten wird oder nicht beachtet wird und der Akkumulatorwert auf einen vordefinierten Wert gesetzt wird oder dem Akkumulatorwert hinzuaddiert wird oder vom Akkumulatorwert abgezogen wird.

Dies ermöglicht die effiziente Durchführung eines kombinierten TDI-CDS-Verfahrens.
Zudem kann vorgesehen sein, dass die Auswahlschaltung eine Zuordnung zwischen jeweils einem Pixel und jeweils einem Akkumulatorelement herstellt, wobei jeweils genau ein Pixel jeweils genau einem Akkumulatorelement zugeordnet wird,
dass das im Pixel anliegende Helligkeitssignal weitergeleitet wird und das Pixel in seinen Ausgangszustand mittels eines Steuerimpulses an der Steuerleitung des Pixels zurückgesetzt wird,
dass nach Beendigung des Rücksetzens des Pixels das anliegende Helligkeitssignal, insbesondere die gespeicherte Restladung, an das Akkumulatorelement durch Setzen eines Steuerimpulses zur Übernahme des negativen Pixelwerts übernommen wird, wobei der negative Wert des am Pixel anliegenden Helligkeitssignals zum Akkumulatorelement, insbesondere zu dessen gespeicherten Wert, hinzuakkumuliert wird, dass anschließend nach einer vorgegebenen Belichtungszeit der Wert des im Pixel anliegenden Helligkeitssignals dem dem Pixel zugeordneten Akkumulatorelement zugeführt wird und zu dem in diesem Akkumulatorelement bereits gespeicherten Wert hinzugezählt bzw. akkumuliert wird, dass in der Steuerschaltung eine programmierbare Digitalschaltung zur automatisierten Durchführung zuvor genannter Schritte für alle Pixel bzw. die diesen Pixeln zugeordneten Akkumulatorelemente vorgesehen ist, und dass eine Zuordnungsbildungsschaltung vorgesehen ist, welche nach Abfrage aller Pixelwerte die Zuordnung nach Beendigung der voranstehenden Schritte zyklisch bzw. durch Verschiebung gegenüber der vorliegenden Zuordnung durch Anlegen eines entsprechenden Steuersignals an die Auswahlschaltung abändert und erneut die Schaltung für eine vorgegebene Anzahl von Wiederholungen mir dieser neuen Zuordnung aktiviert.

Dies ermöglicht die effiziente Durchführung eines kombinierten TDI-CDS-Verfahrens.

Zudem kann vorgesehen sein, dass jedes Pixel einen Rücksetzeingang aufweist, über welchen das am Pixel anliegende Helligkeitssignal, insbesondere der im Pixel gespeicherte Ladungswert, auf einen vorgegebenen Wert, gegebenenfalls mit Rauschen behaftet, zurückgesetzt werden kann.

Dies ermöglicht den besonders einfachen Aufbau eines Sensorpixels.

Ein weiterer vorteilhafter Aspekt der Erfindung sieht vor, dass die Auswahlschaltung durch einen Multiplexer und einen nachgeschalteten Demultiplexer realisiert ist, wobei die Eingänge des Multiplexers als Eingänge der Auswahlschaltung fungieren und die Ausgänge des Demultiplexers als Ausgänge der Auswahlschaltung fungieren und die beiden Steuereingänge des Multiplexers und des Demultiplexers als gemeinsamer Steuereingang der Auswahlschaltung fungieren und/oder dass eine Anzahl von eingangsseitigen Schaltern vorgesehen ist, die der Anzahl der Eingänge entspricht und der erste Anschluss jeweils eines der eingangsseitigen Schalter an jeweils einem der Eingänge der Auswahlschaltung angeschlossen ist, der zweite Anschluss jedes eingangsseitigen Schalters mit einer Verbindungsleitung verbunden ist, eine Anzahl von ausgangsseitigen Schaltern vorgesehen ist, die der Anzahl der Ausgänge entspricht und der zweite Anschluss jeweils eines der ausgangsseitigen Schalter mit jeweils einem der Ausgänge der Auswahlschaltung verbunden ist, der jeweils andere Anschluss jedes ausgangsseitigen Schalters an die Verbindungsleitung angeschlossen ist, und die eingangsseitigen Schalter und die ausgangsseitigen Schalter durch einen gemeinsamen Steuereingang der Auswahlschaltung ansteuerbar bzw. schaltbar sind.

Diese Merkmale vereinfachen den Aufbau der Auswahlschaltung bzw. geben besonders vorteilhafte Ausführungsformen dieser wieder.

Weiters kann vorgesehen sein, dass die Anzahl der Pixel der Anzahl der Akkumulatorelemente entspricht und- die Anzahl der Eingänge der Auswahlschaltung der Anzahl der Ausgänge der Auswahlschaltung entspricht und/oder dass alle Akkumulatorelemente gleich aufgebaut sind.

Eine mit diesen Merkmalen versehene Schaltung ermöglicht eine besonders einfache Zuordnung von Pixeln und Akkumulatorelementen und allenfalls wird die Anordnung der Akkumulatorelemente vereinfacht.

Zudem kann vorgesehen sein, dass für die Vielzahl von Analogschaltungen nur ein einziger Operationsverstärker sowie ein einziger vierter Schalter vorgesehen ist, wobei der invertierende Anschluss des Operationsverstärkers mit allen zweiten Anschlüssen des ersten Kondensators verbunden ist, die ersten Anschlüsse aller ersten Schalter miteinander verbunden sind und der dadurch entstehende Knoten den Eingang der Analogschaltung bildet, die Ausgänge aller Analogschaltungen mit dem Ausgang des Operationsverstärkers verbunden sind und dieser Knoten den Ausgang der Analogschaltung bildet, wobei die Vielzahl der zweiten Schalter als Multiplexer fungiert.

Weiters kann vorgesehen sein, dass dass das Verhältnis der Kapazität des ersten Kondensators zur Kapazität des zweiten Kondensators zwischen 1:1 und 3:1 liegt, wobei der zweite Kondensator stets die geringere oder höchstens die gleiche Kapazität aufweist.

Durch diese Maßnahmen kann ein Akkumulatorelement effizienter und präziser als analoge Schaltung realisiert werden. Die Anordnung umfasst nur wenige Bauteile und ist einfach und platzsparend auf einem Mikrochip zu integrieren.

Weiters kann vorgesehen sein, dass für jede Analogschaltung ein fünfter Schalter und ein sechster Schalter vorgesehen sind, wobei der zweite Anschluss des ersten Schalters mit dem ersten Anschluss des fünften Schalters verbunden ist und der zweite Anschluss des fünften Schalters auf Massepotenzial liegt und der erste Anschluss des sechsten Schalters mit dem zweiten Anschluss des ersten Schalters verbunden ist und der zweite Anschluss des sechsten Schalters mit dem Ausgang der Analogschaltung verbunden ist.

Eine besondere Ausführungsform der Erfindung sieht vor, dass die eingangsseitigen Schalter im Pixel integriert bzw. in dessen unmittelbarer Nähe, insbesondere auf dem Trägersubstrat des die Schaltung tragenden Mikrochips, angeordnet sind und gegebenenfalls dem Pixel nachgeschaltet sind.

Dabei kann insbesondere vorgesehen sein, dass der Schaltung ein Analog -Digital - Wandler nachgeschaltet ist.

Weiters kann vorgesehen sein, dass eine Stromquelle mit der Verbindungsleitung verbunden ist.

Zudem kann vorteilhafterweise vorgesehen sein, dass die Schalter der einzelnen Akkumulatorelemente, die Schalter des Multiplexers sowie die eingangsseitigen und ausgangsseitigen Schalter der Auswahlschaltung elektronisch oder elektrisch schaltbar sind und insbesondere als Transistoren, vorzugsweise alle identisch, und gegebenenfalls in CMOS Technologie, ausgeführt sind.

Schließlich kann vorgesehen sein, dass die Akkumulatorelemente, die Pixel, die Auswahlschaltung sowie der Multiplexer einen Takteingang aufweisen, über welchen diese zu vorgegebenen Zeitabständen wirksam geschaltet werden.

Durch diese Maßnahmen werden eine verbesserte Aufteilung und Nutzung der Chipfläche erreicht sowie lange Zuleitungen mit parasitären Kapazitäten vermieden. Ferner können für die Zeitintegration der gemessenen Pixelsignalwerte digitale Schaltungen verwendet werden. Das kann insbesondere bei niedrigen Zeilenfrequenzen ein Vorteil sein, wenn die analoge Speicherung von Signalwerten, z.B. wegen Leckströmen von Kondensatoren, nicht mehr möglich ist.

Vorteilhafterweise kann das Ausgangssignal der Schaltung von einer Digitalschaltung weiterverarbeitet werden und allenfalls vereinfacht sich der Aufbau der Schaltung für die einzelnen Pixel, wodurch ein Transistor pro Pixel eingespart wird.

Es wird ferner erreicht, dass die Steuerschaltung besonders einfach, insbesondere durch eine Allzweck-Digitalschaltung, realisiert werden kann.

Allenfalls kann bei einer erfindungsgemäßen Schaltung auch eine Einsparung von Bauelementen, Chipfläche und aufgenommener Leistung erzielt werden, wodurch das Verhältnis zwischen belichtbarer Fläche und Gesamtfläche vergrößert wird und die thermische Verlustleistung des Chips verringert wird. Es kann auch eine verbesserte Abwägung zwischen der Verstärkung des eingehenden Signals in den Akkumulatorelementen und den durch die Fertigungstoleranzen verursachten systematischen Fehler der einzelnen Akkumulatorelemente erzielt werden.

Mit diesen Merkmalen wird durch Hinzunahme weniger Schalter eine Auswahlmöglichkeit geschaffen, wodurch bei größeren Lichtstärken die Kompensation des Rauschfehlers zu Gunsten einer erhöhten Anzahl von TDI-Stufen ausgeschaltet oder inaktiv gestellt werden kann. Ferner ermöglichen diese Merkmale die Verringerung des Rauschens eines CMOS-Bildsensors. Da die Realisierung von CDS genauso viele Akkumulatorelemente für die Reset-Werte benötigt, wie er Pixel aufweist, ist der Aufwand für CDS oft für Anwendung bei Flächensensoren zu groß. Hingegen bei einem Bildsensor, insbesondere einen Flächensensor, mit TDI, der zu der Anzahl an Bildspalten wenige Bildzeilen aufweist, bleibt der Aufwand für CDS im vertretbaren Rahmen.

Die Erfindung umfasst ferner eine programmierbare logische Schaltung, insbesondere umfassend einen ASIC oder FPGA, und vorzugsweise umfassend einen analogen Bildsensorbaustein, mit welcher das erfindungsgemäße Verfahren durchführbar ist.

Fig. 1 zeigt schematisch eine erfindungsgemäße Schaltung.
Fig. 2 zeigt schematisch eine erfindungsgemäße Schaltung, wobei die Auswahlschaltung durch einen Multiplexer und einen Demultiplexer realisiert wird.
Fig. 3 zeigt eine analoge Ausführungsform eines Akkumulatorelements.
Fig. 4 zeigt ein digitales Beispiel eines Akkumulatorelements, dass eine gleiche Funktion als die erfindungsgemäße Analogschaltung zeigt.
Fig. 5 zeigt eine Ausführungsform der Auswahlschaltung mittels Transistorschalter.
Fig. 6 zeigt den Aufbau einer Schaltung für ein Pixel.
Fig. 7 zeigt eine besonders vorteilhafte Ausführungsform der Erfindung, bei welcher lediglich ein Operationsverstärker pro Pixelspalte verwendet wird.
Fig. 8 zeigt eine Fortbildung der Schaltung von Fig. 7, bei der die Kompensation des Rauschfehlers zu Gunsten einer erhöhten Pixeldichte ausgeschaltet oder inaktiv gestellt werden kann.

Die Fig. 9a, 9b und 9c zeigen drei verschiedene Zuordnungen zwischen Pixeln und Akkumulatorelementen.

Fig. 10 zeigt schematisch einen Chip, auf dem eine erfindungsgemäße Schaltung realisiert ist.

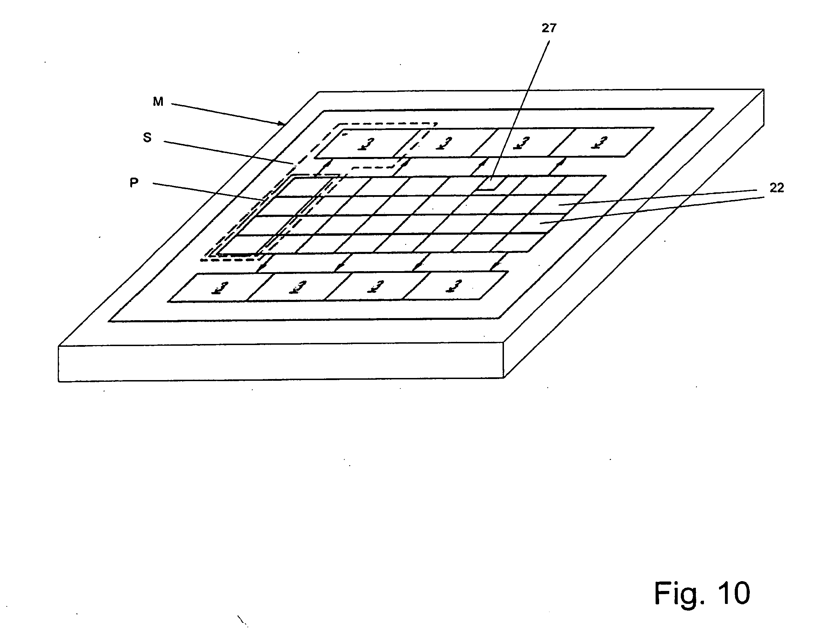

Wie in Fig. 10 dargestellt, ist die erfindungsgemäße Schaltung auf dem Trägersubstrat eines Mikrochips M realisiert, wobei gegebenenfalls einzelne Elemente der erfindungsgemäßen Schaltung auf weiteren Mikrochips angeordnet sind, welche gegebenenfalls über Datenleitungen elektrisch wirksam verbunden sind. Die Oberfläche des Mikrochips M ist rasterartig in einzelne rechteckige Bereiche unterteilt, welche die lichtempfindliche Schaltung der Pixel 22, sowie gegebenenfalls Teile der Ansteuerungslogik bzw. der Auswahlschaltung 1 umfasst. Für jeweils eine Spalte P umfassend eine Vielzahl von Pixel 22 ist eine erfindungsgemäße Schaltung S vorgesehen. Um eine möglichst gute Ausbeute und ein möglichst geringes Rauschen zu erzielen, kann vorgesehen werden, dass die lichtempfindliche Diode 27 einen möglichst großen Anteil der für die einzelnen Pixel 22 zur Verfügung stehenden Fläche bedeckt. Jeder Spalte P kann eine erfindungsgemäße Schaltung zugeordnet werden, welche sich beispielsweise in einer weiteren, nicht von Pixeln 22 bedeckten Fläche des Mikrochips M befindet. Gegebenenfalls kann allen auf dem Mikrochip vorgesehenen Spalten eine gemeinsame Steuerlogik zugeordnet werden. Am Mikrochip M ist ein (nicht dargestellter) Ausgang vorgesehen, an welchem zu vorgegebenen Zeiten die einzelnen Helligkeitsinformationen, gegebenenfalls moduliert oder codiert, insbesondere digitalisiert, vorliegen. An diesen Ausgang können unterschiedliche Einheiten und Geräte wie z.B. Speichermedien oder Monitore angeschlossen werden.

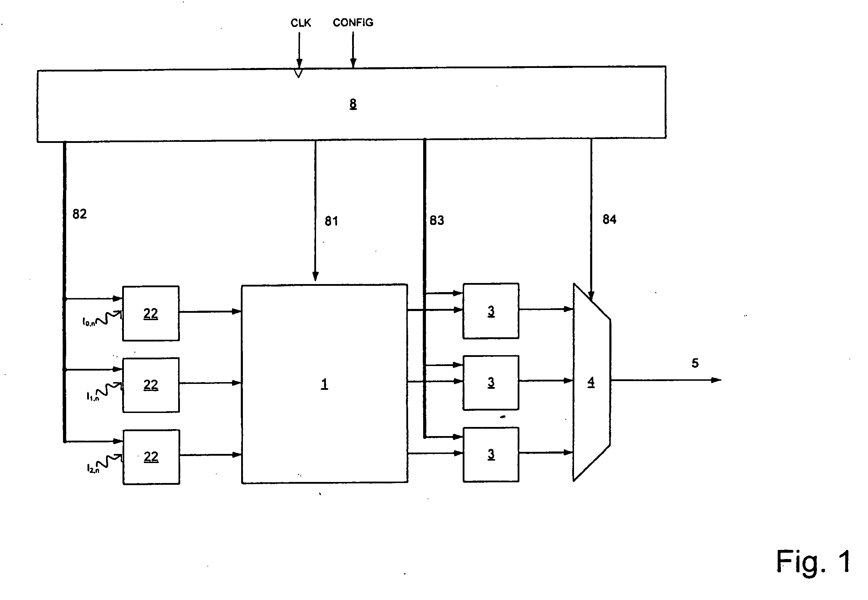

Fig. 1 zeigt den Aufbau einer erfindungsgemäßen Schaltung. Diese umfasst eine Spalte von Pixeln 22, welche an jeweils einen Eingang einer Auswahlschaltung 1 angeschlossen sind. Die Ausgänge der Auswahlschaltung 1 sind jeweils an den Eingang eines Akkumulatorelementes 3 angeschlossen. Die Ausgänge der Akkumulatorelemente 3 sind jeweils an einen Eingang des Multiplexers 4 angeschlossen. Der Ausgang des Multiplexers 4 bildet den Ausgang 5 der gesamten Schaltung. Jedes der Pixel 22 liefert an seinem Ausgang ein Signal, welches der vom Pixel aufgenommenen Lichtintensität entspricht. In der Pixelschaltung wird die auf das Pixel 22 eintreffende Strahlungsleistung in ein Helligkeitssignal, insbesondere einen Ladungs- oder Spannungswert, umgewandelt und entsprechend kodiert am Ausgang des Pixels 22 zur Verfügung gestellt. Da die Pixel 22 an der Auswahlschaltung 1 angeschlossen sind, liegen die dem Helligkeitssignal der einzelnen Pixel 22 entsprechenden Signalwerte an den jeweiligen Eingängen der Auswahlschaltung 1 an. Die Auswahlschaltung 1 bietet die Möglichkeit, einzelne Eingänge mit einzelnen Ausgängen elektrisch zu verbinden. Somit können die Signale einzelner Pixel 22 an vorgegebene Akkumulatorelemente 3 geleitet werden. Die an den einzelnen Ausgängen der Akkumulatorelemente 3 anliegenden Signalwerte werden dem Multiplexer 4 zugeführt, durch welchen einer dieser Signalwerte ausgewählt und an den Ausgang 5 der Schaltung weitergeleitet wird.

Zur Steuerung der Pixel 22, der Auswahlschaltung 1, der Akkumulatorelemente 3 sowie des Multiplexers 4 ist eine Steuerschaltung 8 vorgesehen, welche über getrennte Steuerleitungen 81, 82, 83, 84 mit den einzelnen Schaltungselementen verbunden ist. Als Steuerleitungen 81, 82, 83, 84 sind sowohl einzelne Leitungen als auch eine Vielzahl von dieselbe Steuerinformation tragende Einzelverbindungen, insbesondere Steuerbusse, zu verstehen. Über eine Steuerleitung 82, welche an alle Pixel 22 geführt ist, wird das in den Pixeln 22 gespeicherte Helligkeitssignal bei entsprechend vorliegenden Steuersignalen zurückgesetzt.

Die jeweilige Verschaltung bzw. Verbindung eines Ausgang eines Pixels 22 mit dem Eingang eines Akkumulatorelements 3 durch die Auswahlschaltung 1 wird über die Steuerleitung 81, welche am Steuereingang 17 der Auswahlschaltung 1 angeschlossen ist, vorgegeben. Ein entsprechendes Steuersignal wird in der Steuerschaltung 8 erzeugt und bewirkt in der Auswahlschaltung 1 eine entsprechende Verschaltung. Über die Steuerleitung 83, welche von der Steuerschaltung 8 zu den einzelnen Akkumulatorelementen 3 führt, wird der Betriebszustand der jeweiligen Akkumulatorelemente 3 festgelegt. Ein entsprechendes Steuersignal gelangt von der Steuerschaltung 8 zum entsprechenden Akkumulatorelement 3 und bewirkt in diesem das Setzen des entsprechenden Betriebsmodus. Eine Steuerleitung 84 verbindet den Steuereingang des Multiplexers 4 mit einem entsprechenden Steuerausgang der Steuerschaltung 8. Ein entsprechendes Steuersignal wird von der Steuerschaltung 8 zum Multiplexer 4 geleitet, wodurch erreicht wird, dass lediglich eines der an den Eingängen des Multiplexers 4 anliegenden Signale an den Ausgang 5 übernommen wird.

An der Steuerschaltung 8 sind ein Konfigurationseingang sowie ein Takteingang vorgegeben. Über den Konfigurationseingang können beispielsweise Parameter zur Durchführung des Verfahrens weitergegeben werden. Am Takteingang wird ein externer Takt vorgegeben, welcher insbesondere zur Taktung der einzelnen Akkumulatorelemente 3 an diese mittels der Steuerleitung 83 weitergegeben werden kann.

Mit einer derartigen Schaltung kann nun das erfindungsgemäße Verfahren durchgeführt werden. Ein Programm zur Durchführung des erfindungsgemäßen Verfahrens ist insbesondere in der Steuerschaltung 8 abgespeichert. Die Reihung der einzelnen Pixel 22 bzw. der Akkumulatorelemente 3 kann im Prinzip willkürlich vorgegeben werden. Aus Effizienzgründen ist jedoch eine Zuordnung vorteilhaft, welche unter Ausnutzung der gegenseitigen Lage der einzelnen Pixel 22 bzw. Akkumulatorelemente 3 zueinander herangezogen wird.

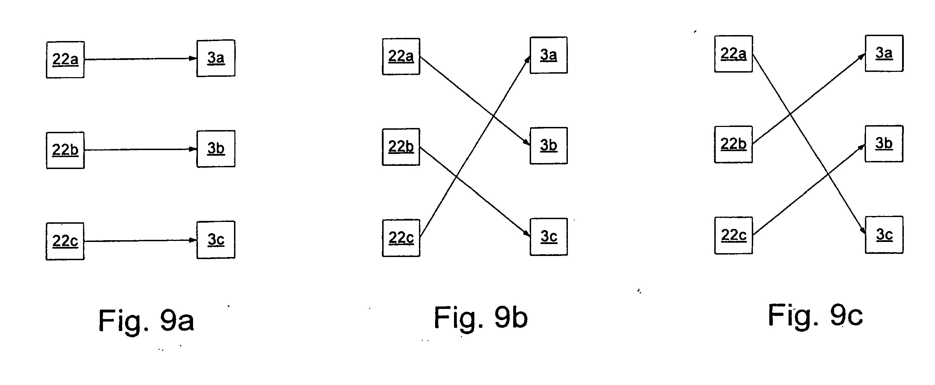

Um die Veränderung der Zuordnung zwischen den einzelnen Pixeln 22 zu den jeweiligen Akkumulatorelementen 3 zu erleichtern, wird für jedes Pixel 22 ein nächstfolgendes Pixel 22 definiert. Als nächstfolgendes Pixel 22 bzw. Akkumulatorelement 3 des letzten Pixels 22 der Reihe bzw. Akkumulatorelements 3 wird das erste Pixel 22 bzw. Akkumulatorelement 3 angesehen. Zunächst wird eine Zuordnung, wie in Fig. 9a dargestellt, zwischen jeweils einem Pixel 22 und jeweils einem Akkumulatorelement 3 getroffen, wobei jeweils genau ein Pixel 22 jeweils genau einem Akkumulatorelement 3 zugeordnet wird.

Dies kann einfach dadurch geschehen, dass eine Zuordnung zwischen dem ersten Pixel 22 aus der Spalte der Pixel 22 und dem ersten Akkumulatorelement 3 aus der Spalte der Akkumulatorelemente 3 vorgenommen wird. Das jeweils nächstfolgende Pixel 22 in der Spalte wird dem jeweils nächstfolgenden Akkumulatorelement 3 in der Spalte der Akkumulatorelemente 3 zugeordnet.

Anschließend wird das im Pixel 22 gespeicherte Helligkeitssignal zurückgesetzt. Dies wird dadurch bewerkstelligt, dass ein entsprechendes Steuersignal über die Steuerleitung 82 an das jeweilige Pixel 22 geleitet wird. Über die Steuerleitung 81 wird eine Verbindung des entsprechenden Pixels 22 mit dem jeweiligen, diesem Pixel 22 zugeordneten Akkumulatorelement 3 in der Auswahlschaltung 1 erreicht. Das am zurückgesetzten Pixel 22 anliegende Helligkeitssignal wird an das entsprechende Akkumulatorelement 3 weitergeleitet und dessen negativer Wert dem im Akkumulatorelement 3 gespeicherten Wert hinzugefügt. Im ersten im Akkumulatorelement 3 durchgeführten Akkumulations- bzw. Integrationsschritt wird der negative Wert des am Pixel 22 anliegenden Helligkeitssignals in das Akkumulatorelement 3 übernommen. Das während des Rücksetzvorgangs am Pixel 22 anliegende Helligkeitssignal kann rauschbedingt nicht exakt festgelegt werden. Somit wird zur Kompensation der negative Wert dieses Helligkeitssignals im entsprechenden Akkumulatorelement 3 abgespeichert. Nach dem Ablauf einer vorgegebenen Belichtungszeit wird der Wert des im Pixel 22 gespeicherten Helligkeitssignals dem, dem Pixel 22 zugeordneten Akkumulatorelement 3 zugeführt und zu dem im Akkumulatorelement 3 gespeicherten Wert hinzugezählt bzw. akkumuliert.

Diese Schritte werden für alle in der Zuordnung festgelegten Paare von Pixeln 22 und Akkumulatorelementen 3 durchgeführt. Dies kann insbesondere dadurch erfolgen, dass ein durch die Steuerschaltung 8 vorgegebener Takt herangezogen wird, wobei in jedem Takt ein Zeitfenster für den Rücksetzvorgang eines Pixels 22 und ein weiteres Zeitfenster für die Akkumulation eines in einem weiteren Pixel 22 gespeicherten Helligkeitssignals in einem diesem weiteren Pixel 22 zugeordneten Akkumulatorelement 3 vorgesehen ist. Die Zeitdauer der beiden Zeitfenster kann aus Gründen der Einfachheit gleich lang gewählt werden.

Die Durchführung des folgenden TDI-Schrittes wird nach der Beendigung dieser genannten Verfahrensschritte ausgelöst, nachdem sich die Projektion des bewegten Gegenstand um eine definierte Strecke, die in der Regel der Höhe einer Pixelzeile entspricht, verschoben hat. Danach wird die Zuordnung zyklisch bzw. durch Verschiebung gegenüber der vorliegenden Zuordnung geändert und die oben genannten Verfahrensschritte erneut durchgeführt. Die zyklische Vertauschung der Zuordnung ist in den Fig. 9a, 9b, 9c dargestellt.

Die zyklische Veränderung der Zuordnung wird vorzugsweise so vorgenommen, dass jedem Pixel 22 das dem jeweils nachfolgenden Pixel 22 zugeordnete Akkumulatorelement zugeordnet wird und dem letzten Pixel 22 der Reihe das ursprünglich dem ersten Pixel 22 der Reihe zugeordnete Akkumulatorelement 3 zugeordnet wird.

Durch die zyklische Struktur der Pixel 22 bzw. der Akkumulatorvverte 3 gilt als nächstfolgendes Pixel des letzten Pixels das erste Pixel und als nächstfolgendes Akkumulatorelement 3 des letzten Akkumulatorelements 3 das erste Akkumulatorelement 3. Somit ergibt sich, dass das in einem bestimmten Schritt dem letzten Pixel 22 zugeordnete Akkumulatorelement 3 im darauffolgenden Schritt dem ersten Akkumulatorelement zugeordnet wird.

Die in Fig. 9b dargestellte Zuordnung ergibt sich durch zyklische Vertauschung der Zuordnung aus Fig. 9a. Die in Fig. 9c dargestellte Zuordnung ergibt sich durch zyklische Vertauschung der Zuordnung aus Fig. 9b. Die in Fig. 9a dargestellte Zuordnung ergibt sich durch zyklische Vertauschung der Zuordnung aus Fig. 9c.

Nach der Durchführung bzw. mehrmaligen schleifenartigen Wiederholung dieser Verfahrensschritte liegen in den einzelnen Akkumulatorelementen 3 die entsprechenden Helligkeitssignale des an der Bildaufnahmeeinheit vorbeibewegten Gegenstands vor. Ferner ist zu erwähnen, dass die zeitlichen Abstände zwischen zwei zyklischen Vertauschungen der Zuordnung von Pixeln 22 zu Akkumulatorelementen 3 an die Relativgeschwindigkeit des beobachteten Gegenstandes gegenüber der Bildaufnahmeeinheit angepasst sind. Bei einer größeren Geschwindigkeit wird die zyklische Verschiebung der Zuordnung zu Akkumulatorelementen 3 in der Zeiteinheit entsprechend öfters vorgenommen, bei einer Relativbewegung in die entsprechend entgegengesetzte Richtung wird die zyklische Verschiebung der Zuordnung in entsprechend entgegengesetzter Richtung vorgenommen.

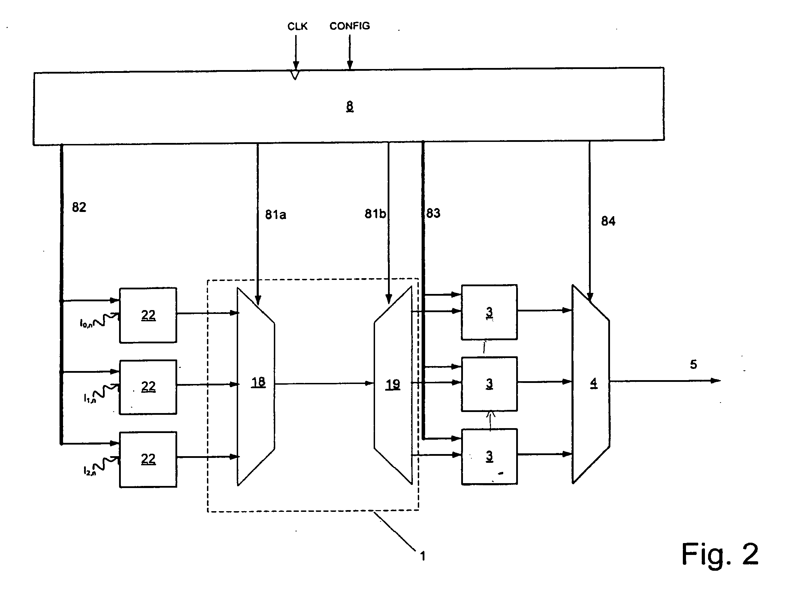

Fig. 2 zeigt schematisch die Ausführung einer Auswahlschaltung 1 durch einen Multiplexer 18 mit nachgeschalteten Demultiplexer 19. Die Eingänge des Multiplexers 18 bilden die Eingänge 11 der Auswahlschaltung 1. Der Ausgang des Multiplexers 18 ist an den Eingang des Demultiplexers 19 mittels einer Verbindungsleitung 15 angeschlossen. Ferner bilden die Ausgänge des Demultiplexers 19 die Ausgänge der Auswahlschaltung 1. Bei dieser speziellen Ausführungsform umfasst die Steuerleitung 81 zwei getrennte Steuerleitungen, wobei die Steuerleitung 81 das Steuersignal zur Steuerung der Auswahlschaltung 1 an deren Eingang 17 führt, die erste 81a der Steuerleitungen, die Schalterstellung des Multiplexers 18 und die zweite 81b der Steuerleitungen die Schalterstellung des Demultiplexers 19 steuert. Durch den Aufbau der Auswahlschaltung ist klar, dass lediglich ein an einem der Eingänge 11 angeschlossenes Pixel 22 an ein einziges an einem Ausgang 12 angeschlossenes Akkumulatorelement 3 verbunden werden kann.

Durch die mittels der Steuerleitung 81 übertragenen Steuersignale kann jeweils einer der Eingänge 11 und einer der Ausgänge 12 ausgewählt werden und ein dem ausgewählten Eingang 11 anliegendes Signal an den ausgewählten Ausgang 12 weitergeleitet werden.

Obwohl diese Schaltung eine Einschränkung gegenüber der allgemeinen Verschaltbarkeit einer im Prinzip beliebig groß gewählten Anzahl von Eingängen 11 mit einer ebenfalls beliebig groß gewählten Anzahl von Ausgängen darstellt, ist diese Schaltung für die Durchführung des erfindungsgemäßen Verfahrens ausreichend und bietet eine sehr einfache Implementierung der durch das Verfahren geforderten Funktionalität, da die sequentielle Verarbeitung der Pixelwerte sehr gut zum Zeitmultiplex der Pixelzeilen bei der üblichen Sensorauslese passt.

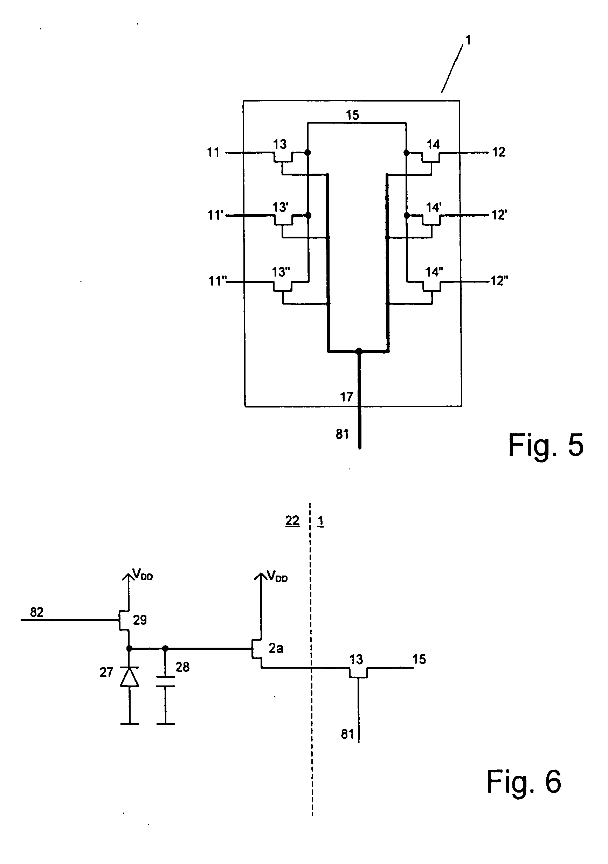

In Fig. 5 wird eine entsprechende Implementierung der Auswahlschaltung 1 mittels einer Anzahl von Schaltern angegeben. Eine Anzahl von eingangsseitigen Schaltern 13 ist vorgesehen, die der Anzahl der Eingänge 11 entspricht, wobei der erste Anschluss jeweils eines der eingangsseitigen Schalter 13 an jeweils einem der Eingänge 11 der Auswahlschaltung 1 angeschlossen ist. Weiters ist der zweite Anschluss jedes eingangsseitigen Schalters 13 mit einer Verbindungsleitung 15 verbunden. Eine Anzahl von ausgangsseitigen Schaltern 14 ist vorgesehen, welche der Anzahl der Ausgänge 12 entspricht, wobei der zweite Anschluss jeweils eines der ausgangsseitigen Schalter 14 mit jeweils einem der Ausgänge 12 der Auswahlschaltung 1 verbunden ist bzw. als Ausgang 12 der Auswahlschaltung 1 fungiert. Der jeweils andere Anschluss jedes ausgangsseitigen Schalters 14 ist an der Verbindungsleitung 15 angeschlossen. Die eingangsseitigen Schalter 13 und die ausgangsseitigen Schalter 14 sind durch einen gemeinsamen Steuereingang 17 der Auswahlschaltung 1 ansteuerbar bzw. schaltbar. Dieser Steuereingang 17 ist an die Steuerleitung 81 angeschlossen und mit der Steuerschaltung 8 verbunden.

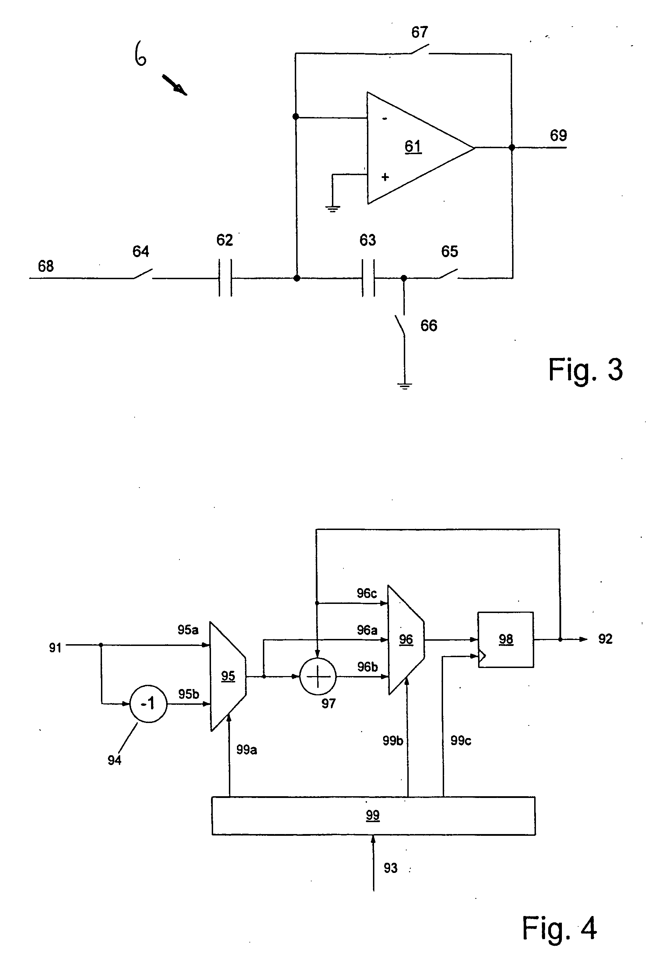

Der Aufbau eines Akkumulatorelements 3 mittels einer Analogschaltung 6 ist in Fig. 3 beschrieben. Diese Schaltung umfasst vier Schalter 64, 65, 66, 67 und zwei Kondensatoren 62, 63 sowie einen Operationsverstärker 61 Die gegenseitige Verschaltung der einzelnen Elemente ist folgendermaßen realisiert: Der Eingang 68 der Schaltung ist mit dem ersten Anschluss des ersten Schalters 64 verbunden. Der zweite Anschluss des ersten Schalters ist 64 mit dem ersten Anschluss des ersten Kondensators 62 verbunden. Der zweite Anschluss des ersten Kondensators 62 ist mit dem ersten Anschluss des zweiten Kondensators 63 verbunden. Der zweite Anschluss des zweiten Kondensators 63 ist mit dem ersten Anschluss des zweiten Schalters 65 sowie mit dem ersten Anschluss des dritten Schalters 66 verbunden. Der zweite Anschluss des dritten Schalters 66 liegt auf Massepotential. Der zweite Anschluss des zweiten Schalters 65 ist mit dem Ausgang 69 der Analogschaltung 6 verbunden. Der nicht-invertierende Eingang des Operationsverstärkers 61 liegt auf Massepotential. Der invertierende Eingang des Operationsverstärkers 61 ist mit dem zweiten Anschluss des ersten Kondensators 62 verbunden. Der Ausgang des Operationsverstärkers 61 ist mit dem Ausgang 69 der Analogschaltung 6 verbunden. Der vierte Schalter 67 ist an je einem seiner Anschlüsse mit dem invertierenden Eingang des Operationsverstärkers 61 sowie mit dem Ausgang des Operationsverstärkers 61 verbunden.

Das in der Analogschaltung 6 anliegende Helligkeitssignal wird durch die Differenz der in den beiden Kondensatoren 62, 63 gespeicherten Ladungen bzw. Ladungswerte repräsentiert bzw. dargestellt. Aus dem Aufbau ergibt sich, dass für die korrekte Durchführung der einzelnen Schritte immer einem Akkumulieren des positiven Ladungswerts ein negatives Setzen bzw. Akkumulieren eines eingehenden Ladungswerts vorangeht. Das negative Setzen eines gegebenen Ladungswerts kann zu jedem beliebigen Zeitpunkt erfolgen, das Akkumulieren eines negativen Ladungswerts kann nur nach dem Hinzufügen oder Akkumulieren eines (positiven) Ladungswerts erfolgen. Das korrekte Endergebnis der durchgeführten Rechenoperationen liegt jeweils am Ende des Akkumulierens eines (positiven) Ladungswerts am Ausgang 69 invertiert vor.

Zum Speichern bzw. Beibehalten eines Akkumulatorwerts in einem Akkumulatorelement 3 werden alle Schalter geöffnet. Die gespeicherte Ladung in den beiden Kondensatoren 62, 63 bleibt dabei unverändert und das anliegende bzw. gespeicherte Helligkeitssignal wird beibehalten.

Zum Akkumulieren des negativen Werts einer anliegenden Ladung bzw. des Helligkeitssignals werden der erste Schalter 64 und der vierte Schalter 67 geschlossen. Der zweite Schalter 65 und der dritte Schalter 66 werden geöffnet. Hierbei wird der erste Kondensator 62 geladen, d.h. die am Eingang 68 anliegende Ladung an den ersten Kondensator 62 geleitet. Das Schließen des vierten Schalters 67 bewirkt eine auftretende Rückkopplung des Operationsverstärkers 61 und in weiterer Folge, dass der zweite Anschluss des ersten Kondensators 62 näherungsweise auf Massepotential bzw. auf virtuellem Massepotential des Operationsverstärkers 61 liegt.

Zum Setzen des negativen Werts des am Eingang 68 anliegenden Spannungs- bzw. Ladungswerts werden der erste Schalter 64, der dritte Schalter 66 und der vierte Schalter 67 geschlossen, der zweite Schalter 65 verbleibt offen. Das Laden des ersten Kondensators 62 erfolgt hierbei genau wie beim Vorgang des negativen Akkumulierens einer am Eingang 68 anliegenden Spannung. Ferner wird der zweite Kondensator 63 über den zweiten Schalter 65 entladen.

Zum Addieren des Werts eines Pixels 22 zu einem Akkumulatorelement 3 wird der erste Schalter 64 geschlossen, der zweite Schalter 65 geschlossen, der dritte Schalter 66 geöffnet und der vierte Schalter 67 geöffnet. Mit der im Pixel 22 gespeicherten Ladung wird der erste Kondensator 62 geladen und es fließt ein entsprechender Ausgleichsstrom, welcher auch durch den zweiten Kondensator 63 fließt. Auf Grund des Verhältnisses der beiden Kapazitäten der Kondensatoren 62, 63 liegt am Ausgang 69 der das Akkumulatorelement 3 bildenden Analogschaltung 6 ein gegenüber dem am Eingang 68 anliegenden Spannungswert skalierter Spannungswert an.

Fig. 4 zeigt ein digitales Beispiel mit der gleichen Funktionalität als die erfindungsgemäße Analogschaltung aus Fig. 3.

Diese digitale Schaltung 9 umfasst einen Eingang 91 und einen Ausgang 92, einen Steuereingang 93, zwei Multiplexer 95, 96, ein Speicherelement 98 und einen Inverter 94, einen Addierer 97 sowie eine Steuerungsschaltung 99. Der Eingang 91 ist an einen Eingang des ersten Multiplexers 95a sowie an den Eingang des Inverters 94 angeschlossen. Der Ausgang des Inverters 94 ist and den zweiten Eingang 95b des ersten Multiplexers 95 angeschlossen. Der Ausgang des ersten Multiplexers 95 ist an einen Eingang des Addierers 97 sowie an einen Eingang 96a des zweiten Multiplexers 96 angeschlossen. Der Ausgang des Addierers 97 ist an einen weiteren Eingang 96b des zweiten Multiplexers 96 angeschlossen. Der Ausgang des zweiten Multiplexers 96 ist an das Speicherelement 98 angeschlossen. Der Ausgang des Speicherelements 98 ist an einen weiteren Eingang 96c des zweiten Multiplexers 96 angeschlossen bzw. rückgekoppelt sowie an den zweiten Anschluss des Addierers 97 angeschlossen.

Die Steuerungsschaltung 99 ist über zwei Steuerleitungen 99a, 99b an den ersten Multiplexer 95 sowie an den zweiten Multiplexer 96 angeschlossen. In diesen Steuerleitungen 99a, 99b liegt jeweils ein Signal an, welches jeweils einen Eingang der beiden Multiplexer 95, 96 selektiert und an den Ausgang weiterliefert. Der Steuereingang 93 der digitalen Schaltung 9 ist an die Steuerungsschaltung 99 angeschlossen.

Die Steuerungsschaltung 99 weist eine weitere Steuerleitung 99c auf, welche an den Steuereingang des Speichers weitergeleitet ist und diesen triggert bzw. die Übernahme des am Eingang anliegenden Signalwertes auslöst.

Um den gespeicherten Wert beizubehalten kann der erste Multiplexer 95 einen seiner beiden Eingangswerte an seinen Ausgang übernehmen. Der zweite Multiplexer 96 übernimmt den Ausgang des Speicherelements 98 von seinem Eingang 96c an seinen Ausgang. Ein Triggerimpuls wird über die Leitung 99c gesendet.

Um den negativen Wert eines anliegenden Werts in das Speicherelement 98 zu übernehmen, übernimmt der erste Multiplexer 95 den Ausgangswert des Inverters 94 von seinem Eingang 95b an seinen Ausgang. Der zweite Multiplexer 96 übernimmt den Ausgangswert des ersten Multiplexers 95 von seinem Eingang 96a an seinen Ausgang. Ein Triggerimpuls wird über die Leitung 99c gesendet.

Um einen am Eingang 91 anliegenden Wert zum Speicher hinzuzuzählen, übernimmt der erste Multiplexer 95 den am Eingang 91 anliegenden Wert vom Eingang 95a an seinen Ausgang. Der zweite Multiplexer 96 übernimmt den an seinem Eingang 96b anliegenden Wert, nämlich den Ausgang des Addierers 97, an seinen Ausgang. Ein Triggerimpuls wird über die Leitung 99c gesendet.

Um einen am Eingang 91 anliegenden Wert vom Speicherwert abzuziehen, übernimmt der erste Multiplexer 95 den am Ausgang des Inverters 94 anliegenden Wert vom Eingang 95b an seinen Ausgang. Der zweite Multiplexer 96 übernimmt den an seinem Eingang 96b anliegenden Wert, nämlich den Ausgang des Addierers 97, an seinen Ausgang. Ein Triggerimpuls wird über die Leitung 99c gesendet.

Weitere bevorzugte Ausführungsformen betreffen die Reduktion von Chipfläche durch die Reduktion der benötigten Operationsverstärker sowie eine Schaltungsvariante, bei welcher zwischen einer reinen TDI-Schaltung und einer kombinierten TDI-CDS-Schaltung ausgewählt werden kann.

Fig. 6 zeigt schematisch den Aufbau eines Pixels 22. Wesentlicher Bauteil dieser Schaltung ist eine fotoempfindliche Diode 27. Diese weist, bedingt durch ihren Aufbau, eine parasitäre Parallelkapazität 28 auf. Die Anode der lichtempfindlichen Diode 27 liegt auf Massepotential. An der Kathode der Diode 27 ist der Source-Anschluss eines MOS-Transistors 29 angeschlossen. Der Drain-Anschluss des MOS-Transistors 29 liegt auf dem Potential der Betriebsspannung. Am Gate des MOS-Transistors 29 ist eine der Steuerleitungen 82 angeschlossen, welche zur Steuerung des entsprechenden Pixels vorgesehen ist. Die Kathode der lichtempfindlichen Diode 27 ist ferner an das Gate eines weiteren MOS-Transistors 2a angeschlossen, dessen Drain-Anschluss auf Betriebsspannung liegt und dessen Source-Anschluss den Ausgang des Pixels bildet. In unmittelbarer örtlicher Nähe des Pixels, jedoch der Auswahlschaltung 1 zugehörig, befindet sich ein Auswahltransistor oder eingangsseitiger Schalter 13 der Auswahlschaltung, welcher über eine der Steuerleitungen 81 gesteuert wird, welche zur Steuerung bzw. Durchschaltung des entsprechenden Pixels vorgesehen ist. In diesem Ausführungsbeispiel ist der eingangsseitige Schalter 13 als MOS-Transistor ausgeführt, wobei dessen Drain-Anschluss an den Source-Anschluss des MOS-Transistors 2a angeschlossen ist. Der Source-Anschluss des den eingangsseitigen Schalter 13 bildenden Transistors bildet die Verbindungsleitung 15. Die entsprechende Steuerleitung 81 ist an den Gateanschluss des MOS-Transistors 13 angeschlossen.

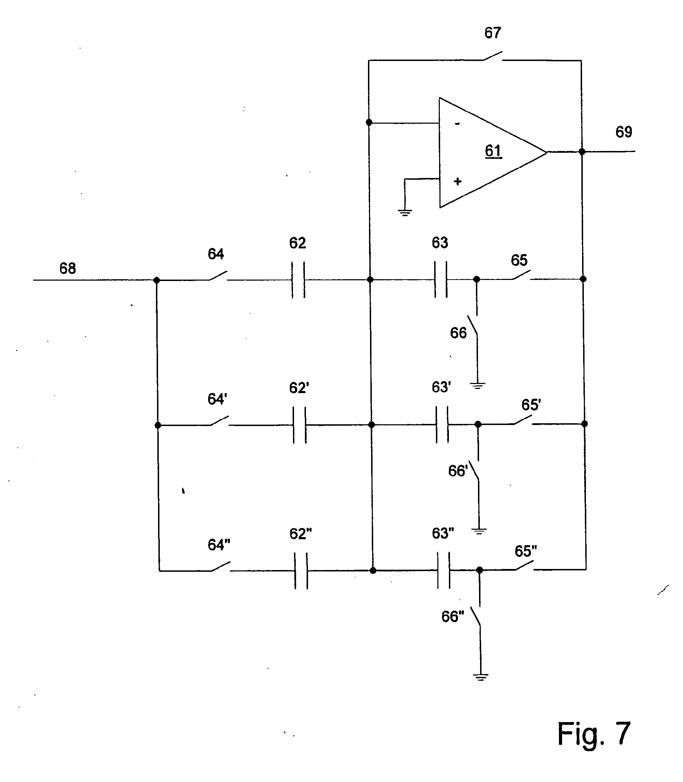

Fig. 7 zeigt eine Schaltung, welche für eine Vielzahl von m Analogschaltungen 6 nur einen einzigen Operationsverstärker 61 sowie einen einzigen vierten Schalter 67 aufweist. Der invertierende Anschluss des Operationsverstärkers 61 ist mit allen zweiten Anschlüssen des ersten Kondensators 62 verbunden. Ferner sind die Ausgänge aller Analogschaltungen mit dem Ausgang des Operationsverstärkers 61 verbunden, wobei der so entstehende Knoten den Ausgang der Analogschaltung 6 bildet. Die ersten Anschlüsse der ersten Schalter 64 sind miteinander verbunden und der durch diese Verbindung gebildete gemeinsame Knoten bildet den gemeinsamen Eingang 68 der Analogschaltung 6. Die Vielzahl der zweiten Schalter 65 fungiert hierbei als Multiplexer 4.

Bei einem seriellen Auslesen der einzelnen Pixel 22 bietet der in Fig. 7 dargestellte Schaltungsaufbau dieselbe Funktionalität wie eine Reihe parallel agierender Analogschaltungen 6. Da stets nur eines der Akkumulatorelemente 3 aktiv ist bzw. mittels des Multiplexers 4 oder der Auswahlschaltung 1 einstellbar ist, wird auch stets nur ein Operationsverstärker 61 benötigt, um die benötigte Funktionalität bereit zu stellen. Die übrigen Akkumulatorelemente 3 haben stets offene Schalter 64, 65, 66, was bewirkt, dass beide Kondensatoren 62, 63 dieser Schaltungen an je einem Anschluss unverbunden bzw. isoliert sind, wodurch die gespeicherte Ladung in den jeweiligen Kondensatoren 62, 63 verbleibt. Die Stellung des gemeinsamen vierten Schalters 67 richtet sich nach der Stellung des entsprechenden aktiven Akkumulatorelements 3.

Der spezielle Aufbau dieser Schaltung bewirkt, dass jeweils nur einer der an den zweiten Kondensatoren 63 anliegenden Ladungswerte bzw. Spannungswerte an den Ausgang 69 der Analogschaltung 6 weitergeleitet wird bzw. an diesem Ausgang 69 anliegt. Die übrigen zweiten Kondensatoren 63 sind gegenüber dem Ausgang durch die jeweiligen zweiten Schalter 65 getrennt bzw. isoliert.

Ferner fungieren die jeweiligen ersten Schalter 64 der Akkumulatorelemente 3 als ausgangsseitige Schalter 14 der Auswahlschaltung 1. Das am Eingang 68 anliegende Signal wird an dasjenige Akkumulatorelement 3 weitergeleitet, dessen erster Schalter 64 geschlossen ist.

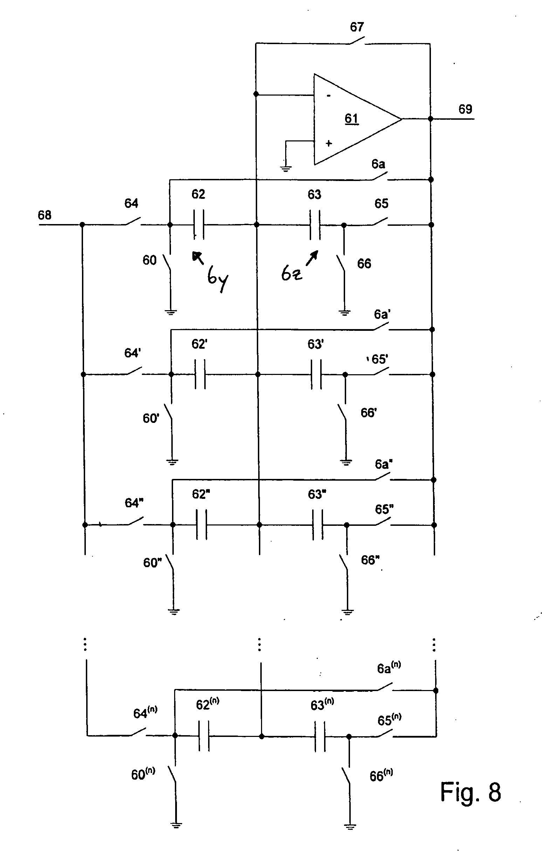

Eine weitere Ausgestaltung des in Fig. 7 dargestellten Schaltungsaufbaus, welche zusätzlich als reine TDI-Schaltung verwendet werden kann, ist in Fig. 8 dargestellt. Für jedes einzelne Akkumulatorelement 3 ist ein fünfter Schalter 60 und ein sechster Schalter 6a vorgesehen, wobei der zweite Anschluss des ersten Schalters 64 mit dem ersten Anschluss des fünften Schalters 60 verbunden ist und der zweite Anschluss des fünften Schalters 60 auf Massepotenzial liegt. Weiteres ist der erste Anschluss des sechsten Schalters 6a mit dem zweiten Anschluss des ersten Schalters 64 verbunden und der zweite Anschluss des sechsten Schalters 6a ist mit dem Ausgang 69 der Analogschaltung 6 verbunden. Sind die beiden Schalter 60 und 6a geöffnet, kann die in Fig. 8 dargestellte Analogschaltung analog zur in Fig. 7 dargestellten Analogschaltung betrieben werden.

Erforderlichenfalls kann vorgesehen werden, dass lediglich einer der ersten Kondensatoren 62 in der oben beschriebenen Weise verwendet wird, während die übrigen ersten Kondensatoren 62 analog den zweiten Kondensatoren 63 beschaltet werden. In diesem Fall entfällt jedoch die Möglichkeit der Rauschkompensation (CDS), die Anzahl der zur Verfügung stehenden Akkumulatorelemente 3 verdoppelt sich jedoch nahezu, wobei 2m-1 Akkumulatorelemente 3 verfügbar sind, und m die Anzahl der Akkumulatorelemente 3 für das CDS-TDI-Verfahren bedeutet.

In diesem Zusammenhang sei eine Anzahl von zwei Schaltern und einem Kondensator, nämlich entweder des zweiten Schalters 65 und des dritten Schalters 66 sowie des zweiten Kondensators 63 oder aber des fünften und sechsten Schalters 60, 6a sowie des ersten Kondensators als erste Akkumulatorzelle 6y oder zweite Akkumulatorzelle 6z bezeichnet.

Besonders geeignet sind derartige Schaltungen, wenn ausreichend Licht zur Verfügung steht und die Bildqualität durch eine Dynamik, also eine höhere Bitbreite der Pixeldaten, erhöht werden soll. Wie bereits erwähnt wird ein Akkumulatorelement 3 analog der in Fig. 7 beschriebenen Funktionsweisen betrieben. Die beiden Schalter 60 und 6a sind dabei stets geöffnet. Bei den übrigen Akkumulatorelementen 3 sind die ersten Schalter 64 stets geöffnet. Durch diese Beschaltung wird durch den fünften Schalter 60 und den sechsten Schalter 6a sowie den ersten Kondensator 62 eine Akkumulatorzelle 6y gebildet, welche eine zu der durch den zweiten Kondensator 63, den zweiten Schalter 65 und den dritten Schalter 66 gebildeten Akkumulatorzelle 6z äquivalente Schaltungstopologie aufweist. Der fünfte Schalter 60 hat dabei dieselbe Funktion wie der dritte Schalter 66. Die Funktionen der Schalter 65 und 6a sind dabei ebenfalls äquivalent.

In einem Verfahren, welches mittels einer derartigen Schaltung durchgeführt wird, ist eine Rauschkompensation der Ladungswerte der einzelnen Pixel 21 nicht möglich bzw. wird als nicht erforderlich angesehen. Jede Akkumulatorzelle 6y, 6z umfasst einen der Kondensatoren 62, 63 sowie zwei Schalter, nämlich entweder den zweiten und den dritten Schalter 65, 66 oder den fünften und den sechsten Schalter 60, 6a. Durch Schließen des zweiten Schalters 65 oder des sechsten Schalters 6a wird der am Eingang 68 anliegende Spannungswert an den entsprechenden Kondensator 62, 63 einer Akkumulatorzelle 6y, 6z weitergeleitet. Der entsprechende andere Schalter, nämlich der dritte Schalter 66 oder der fünfte Schalter 60 bleibt hierbei offen.

Zum Rücksetzen der in einem der beiden Kondensatoren 62, 63 gespeicherten Ladung wird der dritte Schalter 66 oder der Schalter 60 geöffnet, wodurch der entsprechende Kondensator 62, 63 entladen wird.

Soll der im Kondensator 62, 63 gespeicherte Wert beibehalten werden, sind alle Schalter 65, 66 oder 60, 6a geöffnet. Dadurch ist der zweite Anschluss des zweiten Kondensators 63 bzw. der erste Anschluss des ersten Kondensators 62 isoliert, wodurch die Ladung gespeichert wird.

Im Laufe des Verfahrens können einzelne, den entsprechenden Akkumulatorzellen 6y, 6z zugeordnete Ladungswerte von Pixeln 22 an die entsprechenden Akkumulatorzellen 6y, 6z übertragen werden.

Die Darstellung ist bisher von nur einem Farbkanal ausgegangen (Monochrom-Sensor). Eine Verallgemeinerung des dargestellten Verfahrens auf mehrere Farbkanäle, beispielweise für Rot, Grün und Blau für einen Farb-Sensor ist leicht möglich.

Die erfindungsgemäße Schaltung kann gemeinsam mit den Pixeln 22 auf dem Trägersubstrat eines als Bildsensor ausgebildeten Mikrochips angeordnet sein. Die den Bildsensor aufweisende Bildaufnahmeeinheit, insbesondere eine Videokamera, umfasst alle erforderlichen elektronischen, optischen und mechanischen Bauteile zur Aufnahme der Gegenstände auf dem Sensor. Angeschlossen an die erfindungsgemäße Schaltung sind die weiteren Schaltungsbauteile bzw. elemente zur Darstellung und Auswertung der Helligkeitssignale der einzelnen Pixel, z.B. Monitore oder Speichermedien.

**Patentansprüche**

1.    Schaltung zur Auswertung von an einer Reihe, insbesondere einer Spalte eines Bildsensors, von Pixeln (22) anliegenden Helligkeitssignalen, wobei jedes der an den einzelnen Pixeln (22) anliegenden Helligkeitssignale gesondert auf einen vorgegebenen Wert rücksetzbar ist,
wobei eine Auswahlschaltung (1) umfassend eine Anzahl von (n) Eingängen (11) und eine Anzahl von (m) Ausgängen (12) vorgesehen ist, mittels welcher einstellbar ist, welcher der Eingänge (11) mit welchem der Ausgänge (12) verbunden ist, dass jedes Pixel (22) an einen der Eingänge (11) der Auswahlschaltung (1) angeschlossen ist, dass jedes Akkumulatorelement (3) einem der Ausgänge (12) der Auswahlschaltung (1) zur Akkumulation eines dem Helligkeitssignal eines Pixels (22) entsprechenden Werts nachgeschaltet ist, und dass eine Steuerschaltung (8) an die jeweiligen Steuereingänge der Auswahlschaltung (1) der Akkumulatorelemente (3) und der Pixel (22) angeschlossen ist, und diese von der Steuerschaltung (8) steuerbar sind, **dadurch gekennzeichnet, dass**

- zumindest eines der Akkumulatorelemente (3) als Analogschaltung (6) aufgebaut oder realisiert ist, welche einen Operationsverstärker (61), zwei Kondensatoren (62, 63), sowie vier Schalter (64, 65, 66, 67) umfasst, wobei
- der Eingang (68) der Schaltung mit dem ersten Anschluss des ersten Schalters (64) verbunden ist,
- der zweite Anschluss des ersten Schalters (64) mit dem ersten Anschluss des ersten Kondensators (62) verbunden ist,
- der zweite Anschluss des ersten Kondensators (62) mit dem ersten Anschluss des zweiten Kondensators (63) verbunden ist,

- der zweite Anschluss des zweiten Kondensators (63) mit dem ersten Anschluss des zweiten Schalters (65) sowie mit dem ersten Anschluss des dritten Schalters (66) verbunden ist,

- der zweite Anschluss des dritten Schalters (66) auf Massepotential liegt,

- der zweite Anschluss des zweiten Schalters (65) mit dem Ausgang (69) der Analogschaltung (6) verbunden ist,

- der nicht-invertierende Eingang des Operationsverstärkers (61) auf Massepotential liegt,

- der invertierende Eingang des Operationsverstärkers (61) mit dem zweiten Anschluss des ersten Kondensators (62) verbunden ist,

- der Ausgang des Operationsverstärkers (61) mit dem Ausgang (69) der Analogschaltung (6) verbunden ist, und

- der vierte Schalter (67) an je einem seiner Anschlüsse mit dem invertierenden Eingang des Operationsverstärkers (61) sowie mit dem Ausgang des Operationsverstärkers (61) verbunden ist.

2. Schaltung nach Anspruch 1, **dadurch gekennzeichnet,**

- **dass** die einzelnen Ausgänge der jeweiligen Akkumulatorelemente (3) an die Eingänge eines Multiplexers (4) angeschlossen sind,

- wobei die Steuerschaltung (8) an den Steuereingang des Multiplexers (4) angeschlossen ist und diesen steuert, und

- wobei der Ausgang des Multiplexers (4) den Ausgang (5) der Schaltung bildet und/oder

- **dass** in der Auswahlschaltung (1) bei Vorliegen eines Steuersignals an einem dafür vorgesehenen Steuereingang (17) genau ein Eingang (11) mit genau einem Ausgang (12) entsprechend der im Steuersignal enthaltenen Information verbunden wird und alle anderen Eingänge (11) und Ausgänge (12) unverbunden bzw. gegenüber einander isoliert sind.

3. Schaltung nach Anspruch 1 oder 2, **dadurch gekennzeichnet,**

- **dass** jedes der Akkumulatorelemente (3) einen Steuereingang, gegebenenfalls für mehrere anliegende binär codierte Steuerinformationen, aufweist, über welche mittels der Steuerschaltung (8) vorgegeben wird, ob das am Eingang des Akkumulatorelements (3) anliegende Eingangssignal

- nicht beachtet wird und der Akkumulatorwert beibehalten wird oder

- den Akkumulatorwert überschreibt, wobei der negative Wert des Eingangssignals im Akkumulatorelement (3) abgespeichert wird oder

- dem Akkumulatorwert hinzuaddiert wird oder

- vom Akkumulatorwert abgezogen wird oder

- den Akkumulatorwert überschreibt, und/oder

- **dass** jedes der Akkumulatorelemente (3) einen Steuereingang, gegebenenfalls für mehrere anliegende binär codierte Steuerinformationen, aufweist, über welche mittels der Steuerschaltung (8) vorgegeben wird, ob das am Eingang des Akkumulatorelements (3) anliegende Eingangssignal

- nicht beachtet wird und der Akkumulatorwert beibehalten wird oder

- nicht beachtet wird und der Akkumulatorwert auf einen vordefinierten Wert gesetzt wird oder

- dem Akkumulatorwert hinzuaddiert wird oder

- vom Akkumulatorwert abgezogen wird.

4. Schaltung nach einem der vorangehenden Ansprüche, **dadurch gekennzeichnet, dass**

a) die Auswahlschaltung (1) eine Zuordnung zwischen jeweils einem Pixel (22) und jeweils einem Akkumulatorelement (3) herstellt, wobei jeweils genau ein Pixel (22) jeweils genau einem Akkumulatorelement (3) zugeordnet wird,

b) das im Pixel (22) anliegende Helligkeitssignal weitergeleitet wird und das Pixel (22) in seinen Ausgangszustand mittels eines Steuerimpulses an der Steuerleitung des Pixels (22) zurückgesetzt wird,

c) nach Beendigung des Rücksetzens des Pixels (22) das anliegende Helligkeitssignal, insbesondere die gespeicherte Restladung, an das Akkumulatorelement (3) durch Setzen eines Steuerimpulses zur Übernahme des negativen Pixelwerts übernommen wird, wobei der negative Wert des am Pixel (22) anliegenden Helligkeitssignals zu dem Wert im Akkumulatorelement (3) hinzuakkumuliert wird,

d) anschließend nach einer vorgegebenen Belichtungszeit der Wert des im Pixel (22) anliegenden Helligkeitssignals dem dem Pixel (22) zugeordneten Akkumulatorelement (3) zugeführt wird und zu dem in diesem Akkumulatorelement (3) bereits gespeicherten Wert hinzugezählt bzw. akkumuliert wird,

e) in der Steuerschaltung eine programmierbare Digitalschaltung zur automatisierten Durchführung der Schritte b) bis d) für alle Pixel (22) bzw. die diesen Pixeln (22) zugeordneten Akkumulatorelemente (3) vorgesehen ist, und

f) eine Zuordnungsbildungsschaltung vorgesehen ist, welche nach Abfrage aller Pixelwerte die Zuordnung nach Beendigung der Schritte b) bis e) zyklisch bzw. durch Verschiebung gegenüber der vorliegenden Zuordnung durch Anlegen eines entsprechenden Steuersignals an die Auswahlschaltung (1) abändert und erneut die Schaltung für eine vorgegebene Anzahl von Wiederholungen mir dieser neuen Zuordnung aktiviert.

5.  Schaltung nach einem der vorangehenden Ansprüche, **dadurch gekennzeichnet, dass** jedes Pixel (22) einen Rücksetzeingang (24) aufweist, über welchen das am Pixel (22) anliegende Helligkeitssignal, insbesondere der im Pixel (22) gespeicherte Ladungswert, auf einen vorgegebenen Wert, gegebenenfalls mit Rauschen behaftet, zurückgesetzt werden kann.

6.  Schaltung nach einem der vorangehenden Ansprüche, **dadurch gekennzeichnet, dass** die Auswahlschaltung (1) durch einen Multiplexer (18) und einen nachgeschalteten Demultiplexer (19) realisiert ist, wobei die Eingänge des Multiplexers (18) als Eingänge (11) der Auswahlschaltung (1) fungieren und die Ausgänge des Demultiplexers (19) als Ausgänge (12) der Auswahlschaltung (1) fungieren und die beiden Steuereingänge des Multiplexers (18) und des Demultiplexers (19) als gemeinsamer Steuereingang (17) der Auswahlschaltung (1) fungieren und/oder

    - dass eine Anzahl von eingangsseitigen Schaltern (13) vorgesehen ist, die der Anzahl der Eingänge (11) entspricht und der erste Anschluss jeweils eines der eingangsseitigen Schalter (13) an jeweils einem der Eingänge (11) der Auswahlschaltung (1) angeschlossen ist,
    - der zweite Anschluss jedes eingangsseitigen Schalters (13) mit einer Verbindungsleitung (15) verbunden ist,
    - eine Anzahl von ausgangsseitigen Schaltern (14) vorgesehen ist, die der Anzahl der Ausgänge (12) entspricht und der zweite Anschluss jeweils eines der ausgangsseitigen Schalter (14) mit jeweils einem der Ausgänge (12) der Auswahlschaltung (1) verbunden ist,
    - der jeweils andere Anschluss jedes ausgangsseitigen Schalters (14) an die Verbindungsleitung (15) angeschlossen ist, und
    - die eingangsseitigen Schalter (13) und die ausgangsseitigen Schalter (14) durch einen gemeinsamen Steuereingang (17) der Auswahlschaltung (1) ansteuerbar bzw. schaltbar sind.

7.  Schaltung nach einem der vorangehenden Ansprüche, **dadurch gekennzeichnet, dass**

    - die Anzahl der Pixel (22) der Anzahl der Akkumulatorelemente (3) entspricht und- die Anzahl der (n) Eingänge (11) der Auswahlschaltung (1) der Anzahl der (m) Ausgänge (12) der Auswahlschaltung entspricht und/oder
    - dass alle Akkumulatorelemente (3) gleich aufgebaut sind.

8.  Schaltung nach einem der vorangehenden Ansprüche, **dadurch gekennzeichnet, dass**

    - für die Vielzahl (m) von Analogschaltungen (6) nur ein einziger Operationsverstärker (61) sowie ein einziger vierter Schalter (67) vorgesehen ist, wobei
    - der invertierende Anschluss des Operationsverstärkers (61) mit allen zweiten Anschlüssen des ersten Kondensators (62) verbunden ist,
    - die ersten Anschlüsse aller ersten Schalter (64) miteinander verbunden sind und der **dadurch** entstehende Knoten den Eingang (68) der Analogschaltung (6) bildet,
    - die Ausgänge (69) aller Analogschaltungen (6) mit dem Ausgang des Operationsverstärkers (61) verbunden sind und dieser Knoten den Ausgang der Analogschaltung (6) bildet, wobei die Vielzahl (m) der zweiten Schalter (65) als Multiplexer (4) fungiert.

9.  Schaltung nach einem der vorangehenden Ansprüche, **dadurch gekennzeichnet, dass**

    - dass das Verhältnis der Kapazität des ersten Kondensators (62) zur Kapazität des zweiten Kondensators (63) zwischen 1:1 und 3:1 liegt, wobei der zweite Kondensator (63) stets die geringere oder höchstens die gleiche Kapazität aufweist.

10. Schaltung nach einem der vorangehenden Ansprüche, **dadurch gekennzeichnet, dass** für jede Analogschaltung (6) ein fünfter Schalter (60) und ein sechster Schalter (6a) vorgesehen sind, wobei

    a) der zweite Anschluss des ersten Schalters (64) mit dem ersten Anschluss des fünften Schalters (60) verbunden ist und der zweite Anschluss des fünften Schalters (60) auf Massepotenzial liegt
    und
    b) der erste Anschluss des sechsten Schalters (6a) mit dem zweiten Anschluss des ersten Schalters (64) verbunden ist und der zweite Anschluss des sechsten Schalters (6a) mit dem Ausgang (69) der Analogschaltung (6) verbunden ist.

11. Schaltung nach einem der vorangehenden Ansprüche, **dadurch gekennzeichnet, dass** die eingangsseitigen Schalter (13) im Pixel (22) integriert bzw. in dessen unmittelbarer Nähe, insbesondere auf dem Trägersubstrat des die Schaltung tragenden Mikrochips, angeordnet sind und gegebenenfalls dem Pixel (21) nachgeschaltet sind.

12. Schaltung nach einem der vorangehenden Ansprüche, **dadurch gekennzeichnet, dass** der Schaltung ein Analog -Digital -Wandler (16) nachgeschaltet ist.

13. Schaltung nach einem der vorangehenden Ansprüche, **dadurch gekennzeichnet, dass** eine Stromquelle (15a) mit der Verbindungsleitung (15) verbunden ist.

14. Schaltung nach einem der vorangehenden Ansprüche, **dadurch gekennzeichnet, dass** die Schalter (64, 65, 66, 67, 60, 6a) der einzelnen Akkumulatorelemente (3), die Schalter des Multiplexers (4) sowie die eingangsseitigen und ausgangsseitigen Schalter (13, 14) der Auswahlschaltung (1) elektronisch oder elektrisch schaltbar sind und insbesondere als Transistoren, vorzugsweise alle identisch, und gegebenenfalls in CMOS Technologie, ausgeführt sind.

15. Schaltung nach einem der vorangehenden Ansprüche, **dadurch gekennzeichnet, dass** die Akkumulatorelemente (3), die Pixel (22), die Auswahlschaltung (1) sowie der Multiplexer (4) einen Takteingang aufweisen, über welchen diese zu vorgegebenen Zeitabständen wirksam geschaltet werden.

**Claims**

1. Circuit for the evaluation of luminance signals on pixels in a row, particularly in a column of an image sensor, wherein each one of the luminance signals existent on said pixels (22) may separately be reset to a predetermined value,
   wherein a selection circuit (1) is provided, which comprises a number of (n) inlets (11) and a number of (m) outlets (12), by means of which it is enabled to adjust, which of the inlets (11) is connected to which of the outlets (12), that each pixel (22) is connected to one of the inlets (11) of the selection circuit (1), that each accumulator element (3) is postponed to one of the outlets (12) of the selection circuit (1) for accumulating a value, which corresponds to the luminance signal of one pixel (22), and that a control circuit (8) is connected to the respective control inputs of the selection circuit (1) of the accumulator elements (3) and of the pixels (22) and these are controllable by the control circuit (8), **characterised in that**

   - at least one of the accumulator elements (3) is built up or is realised as an analogue circuit (6), which comprises an operational amplifier (61), two capacitors (62, 63) as well as four switches (64, 65, 66, 67), wherein
   - the input (68) of the circuit is connected to the first terminal of the first switch (64),
   - the second terminal of the first switch (64) is connected to the first terminal of the first capacitor (62),
   the second terminal of the first capacitor (62) is connected to the first terminal of the second capacitor (63),
   - the second terminal of the second capacitor (63) is connected to the first terminal of the second switch (65) as well as to the first terminal of the third switch (66),
   - the second terminal of the third switch (66) is on mass potential,
   - the second terminal of the second switch (65) is connected to the output (69) of the analogue circuit (6),
   - the non-inverting input of the operational amplifier (61) is on mass potential,
   - the inverting input of the operational amplifier (61) is connected to the second terminal of the first capacitor (62),
   - the output of the operational amplifier (61) is connected to the output (69) of the analogue circuit (6), and
   - the fourth switch (67) on one of its terminals each is connected to the inverting input of the operational amplifier (61) as well as with the output of the operational amplifier (61).

2. Circuit according to claim 1, **characterised in**

   - **that** the individual outputs of the respective accumulator elements (3) are connected to the inputs of a multiplexer (4),
   - wherein the control circuit (8) is connected to the control input of the multiplexer (4) and controls it, and
   - wherein the output of the multiplexer (4) forms the output (5) of the circuit and/or
   - **that** in the selection circuit (1), in case of the presence of a control signal on a control input (17) provided for it, precisely one input (11) is connected to precisely one output (12) in correspondence with the information contained in the control signal, while all other inputs (11) and outputs (12) are disconnected or isolated with respect to one another.

3. Circuit according to claim 1 or 2, **characterised in**

   - **that** each one of the accumulator elements (3) comprises a control input, optionally for a plurality of binary coded control information being present, by which it will be predetermined by means of the control circuit (8), whether the input signal existing on the input of the accumulator element (3)
- is not considered, and the accumulator value is maintained, or
- overwrites the accumulator value, the negative value of the input signal being memorised in the accumulator element (3), or
- is added to the accumulator value, or
- is subtracted from the accumulator value
- overwrites the accumulator value, and/or
- **that** each accumulator element (3) comprises a control input, optionally for a plurality of binary coded control information being present, by which it will be predetermined by means of the control circuit (8), whether the input signal existing on the input of the accumulator element (3)
- is not considered, and the accumulator value is maintained, or
- is not considered, and the accumulator value is set on a predefined value
or
- is added to the accumulator value, or
- is subtracted from the accumulator value.

4. Circuit according to any of the preceding claims, **characterised in that**

a) the selection circuit (1) establishes an allocation between one respective pixel (22) and one respective accumulator element (3), wherein precisely one respective pixel (22) is associated to precisely one accumulator element (3),
b) the luminance signal present in a pixel (22) is transferred, and the pixel (22) is reset into its initial condition by means of a control pulse at the control conductor of the pixel (22),
c) having terminated resetting the pixel (22), the existing luminance signal, particularly the memorised residual charge, is carried over to the accumulator element (3) by setting a control pulse for carrying over the negative pixel value, wherein the negative value of the luminance signal existing on the pixel (22) is accumulated to the accumulator element, particularly to the memorised value of it,
d) subsequently, after a predetermined time of illumination, the value of the luminance signal existing in the pixel (22) is supplied to the accumulator element (3) associated to the pixel (22) and is added or accumulated to the value already memorised in this accumulator element (3),
e) a programmable digital circuit is provided in the control circuit for automatically carrying out steps b) to d) for all pixels (22) or for all accumulator elements (3) associated to these pixels, and
f) an allocation forming circuit is provided which, after reading all pixel values, after termination of steps b) to e), changes the allocation cyclically or be displacing with respect to the existing allocation by putting on a corresponding control signal to the selection circuit (1), and activates anew the circuit for a predetermined number of repetitions with this new allocation.

5. Circuit according to any of the preceding claims, **characterised in that** each pixel (22) comprises a reset input (24), over which the luminance signal existing on the pixel (22), particularly the charge value memorised in the pixel (22), may be reset to a predetermined value, in cases afflicted with noise.

6. Circuit according to any of the preceding claims, **characterised in that** the selection circuit (1) is realised by a multiplexer (18) and a postponed demultiplexer (19), wherein the inputs of the multiplexer (18) function as inputs (11) of the selection circuit (1), and the outputs of the demultiplexer (19) function as outputs (12) of the selection circuit (1), and the two control inputs of the multiplexer (18) and of the demultiplexer (19) function in common as a control input (17) of the selection circuit (1) and/or

- that a number of switches (13) is provided at the input side, which corresponds to the number of inputs (11), and the first terminal of one each of the switches (13) at the input side is connected to one each of the inputs (11) of the selection circuit (1),
- the second terminal of each switch (13) at the input side is connected to a connecting conductor (15),
- a number of switches (14) is provided at the output side, which corresponds to the number of outputs (12), and the second terminal of one each of the switches (14) at the output side is connected to one each of the outputs (12) of the selection circuit (1),
- the respective other terminal of each switch (14) at the output side is connected to the connecting conductor (15),
and
- the switches (13) at the input side and the switches (14) at the output side are controllable or switchable by one control input (17) in common of the selection circuit (1).

7. Circuit according to any of the preceding claims, **characterised in that**

- the number of pixels (22) corresponds to the number of accumulator elements (3) and the number of (n) inputs (11) of the selection circuit (1) corresponds to the number of (m) outputs (12) of the selection circuit and/or
- all accumulator elements are equally built up.

8. Circuit according to any of the preceding claims, **characterised in that**

   - a single operational amplifier (61) only as well as a single fourth switch (67) is provided for the plurality (m) of analogue circuits (6), wherein
   - the inverting terminal of the operational amplifier (61) is connected to all second terminals of the first capacitor (62),
   - the first terminals of all first switches (64) are interconnected, and the, thus, generated node forms the input (68) of the analogue circuit (6),
   - the outputs (69) of all analogue circuits (6) are connected to the output of the operational amplifier (61), and this node forms the output of the analogue circuit (6), wherein the plurality (m) of second switches (65) function as multiplexer (4).

9. Circuit according to any of the preceding claims, **characterised in**

   - **that** the relationship of the capacity of the first capacitor (62) to the capacity of the second capacitor (63) is between 1:1 and 3:1, wherein the second capacitor (63) has always a smaller or, in maximum, an equal capacity.

10. Circuit according to any of the preceding claims, **characterised in that** a fifth switch (60) and sixth switch (6a) are provided for each analogue circuit (6), wherein

    a) the second terminal of the first switch (64) is connected to the first terminal of the fifth switch (60), and the second terminal of the fifth switch (60) is on mass potential, and
    b) the first terminal of the sixth switch (6a) is connected to the second terminal of the first switch (64), and the second terminal of the sixth switch (6a) is connected to the output (69) of the analogue circuit (6).

11. Circuit according to any of the preceding claims, **characterised in that** the switches (13) at the input side are integrated in the pixel (22) or are arranged in its immediate proximity, particularly on the carrier substrate of the microchip which carries the circuit, and optionally are postponed to the pixel (22).

12. Circuit according to any of the preceding claims, **characterised in that** an analogue to digital converter (16) is postponed to the circuit.

13. Circuit according to any of the preceding claims, **characterised in that that** a current source (15a) is connected to the connecting conductor (15).

14. Circuit according to any of the preceding claims, **characterised in that** the switches (64, 65, 66, 67, 60, 6a) of the individual accumulator elements (3), the switches of the multiplexer (4) as well as the switches (13, 14) at the input side and at the output side of the selection circuit (1) are electronically or electrically switchable, and are, in particular, realised as transistors, preferably in an identical way, and optionally in CMOS technology.

15. Circuit according to any of the preceding claims, **characterised in that** the accumulator elements (3), the pixels (22), the selection circuit (1) as well as the multiplexer (4) comprise a clock input, over which they are activated at predetermined time intervals.

## Revendications

1. Circuit pour l'évaluation des signaux de luminosité existant à une série de pixels (22), particulièrement à une colonne d'un capteur d'image, dans lequel chacun des signaux de luminosité, existants aux pixels (22) individuels, peut être remis séparément à une valeur donnée,
   dans lequel un circuit de sélection (1) est prévu, qui comprend un nombre (n) d'entrées (11) et un nombre (m) de sorties (12), au moyen duquel il est ajustable, quelle des entrées (11) soit reliée à quelle des sorties (12), que chaque pixel (22) est relié à une des entrées (11) du circuit de sélection (1), que chaque élément accumulateur (3) est en aval d'une des sorties (12) du circuit de sélection (1) pour accumuler une valeur, qui correspond au signal de luminosité d'un pixel (22), et qu'un circuit de commande (8) est relié aux entrées de commande respectives du circuit de sélection (1), des éléments accumulateur (3) et des pixels (22), ceux-ci étant susceptible à être commandés par le circuit de commande (8), **caractérisé en ce, qu'**

   - au moins un des éléments accumulateur (3) est constitué ou réalisé comme un circuit analogue (6), qui comprend un amplificateur opérationnel (61), deux condensateurs (62, 63) ainsi que quatre interrupteurs (64, 65, 66, 67), dans lequel
   - l'entrée (68) du circuit est reliée à un premier raccord du premier interrupteur (64),
   - le deuxième raccord du premier interrupteur (64) est relié au premier raccord du premier condensateur (62),
   - le deuxième raccord du premier condensateur (62) est relié au premier raccord du deuxième condensateur (63),
   - le deuxième raccord du deuxième condensateur (62) est relié au premier raccord du deuxième interrupteur (65) ainsi qu'au premier raccord du troisième interrupteur (66),

- le deuxième raccord du troisième interrupteur (66) est au potentiel de masse,
- le deuxième raccord du deuxième interrupteur (65) est relié à la sortie (69) du circuit analogue (6),
- l'entrée non inverseur de l'amplificateur opérationnel (61) est reliée au potentiel de masse,
- l'entrée inverseur de l'amplificateur opérationnel (61) est reliée au deuxième raccord du premier condensateur (62),
- la sortie de l'amplificateur opérationnel (61) est reliée à la sortie (69) du circuit analogue (6), et
- le quatrième interrupteur (67) avec un raccord chacun est relié à l'entrée inverseur de l'amplificateur opérationnel (61) ainsi qu'à la sortie de l'amplificateur opérationnel (61).

2. Circuit selon la revendication 1, **caractérisé en ce,**

- **que** les sorties individuelles des éléments accumulateurs (3) respectifs sont reliées aux entrées d'un multiplexeur (4),
- dans lequel le circuit de commande (8) est relié à l'entrée de commande du multiplexeur (4) et commande ceci, et
- dans lequel la sortie du multiplexeur (4) forme la sortie (5) du circuit, et/ou
- **qu'**en cas de présence d'un signal de commande à une entrée de commande (17) y prévue dans le circuit de sélection (1), c'est précisément une entrée (11) qui est reliée à précisément une sortie (12) en correspondance avec l'information contenue dans le signal de commande, et tous les autres entrées (11) et sorties (12) ne sont pas reliées ou sont isolées l'une par rapport à l'autre.

3. Circuit selon la revendication 1 ou 2, **caractérisé en ce**

- **que** chacun des éléments accumulateurs (3) comprend une entrée de commande, le cas échéant pour plusieurs informations de commande existantes codées d'une façon binaire, par lesquelles on prédétermine au moyen du circuit de commande (8), si le signal d'entrée existant à l'entrée de l'élément accumulateur (3)
- n'est pas pris en considération en maintenant la valeur accumulateur, ou
- recouvre la valeur accumulateur, la valeur négatif du signal d'entrée étant conservé en mémoire dans l'élément accumulateur (3), ou
- est additionnée à la valeur accumulateur, ou
- est soustrait de la valeur accumulateur, ou
- recouvre la valeur accumulateur, et/ou
- **que** chacun des éléments accumulateurs (3) comprend une entrée de commande, le cas échéant pour plusieurs informations de commande existantes codées d'une façon binaire, par lesquelles on prédétermine au moyen du circuit de commande (8), si le signal d'entrée existant à l'entrée de l'élément accumulateur (3)
- n'est pas pris en considération en maintenant la valeur accumulateur, ou
- n'est pas pris en considération et la valeur accumulateur est remis à une valeur prédéterminée, ou
- est additionnée à la valeur accumulateur, ou
- est soustrait de la valeur accumulateur.

4. Circuit selon une quelconque des revendications précédentes, **caractérisé en ce, que**

a) le circuit de sélection (1) fait une association entre un pixel (22) respectif et un élément accumulateur (3) respectif, où précisément un pixel (22) respectif est associé à précisément un élément accumulateur (3) respectif,
b) le signal de luminance existant dans le pixel (22) est transmis, et le pixel (22) est remis à son état initial au moyen d'une impulsion de commande à la ligne de commande du pixel (22),
c) après la fin de la rémission du pixel (22), le signal de luminance existant, particulièrement la charge résiduelle mémorisée, est assumé par l'élément accumulateur (3) en mettant une impulsion de commande, pour que la valeur négative de pixel soit assumée, tout en accumulant la valeur négative du signal de luminance existant au pixel (22) à l'élément accumulateur (3), particulièrement à sa valeur mémorisée,
d) puis, après un temps d'illumination prédéterminé, la valeur du signal de luminance existant dans le pixel (22) est délivré à l'élément accumulateur (3) associé au pixel (22), et est additionné ou accumulé à la valeur déjà mémorisée dans cet élément accumulateur (3),
e) un circuit digital programmable est prévu dans le circuit de commande pour exécuter les étapes b) à d) d'une manière automatisée pour tous les pixels (22) ou pour tous les éléments accumulateurs (3) associés à ces pixels (22), et
f) un circuit de formation d'association est prévu, qui, après l'interrogation de toutes les valeurs de pixel, et après l'achèvement des étapes b) à e), change l'association cycliquement ou par un déplacement par rapport à l'association ancienne en mettant un signal correspondant de commande au circuit de sélection (1), et active de nouveau le circuit pour un nombre prédéterminé de répétitions avec cette nouvelle association.

5. Circuit selon une quelconque des revendications précédentes, **caractérisé en ce, que** chaque pixel (22) présente une entrée de remise (24) par laquelle le signal de luminance existant au pixel (22) peut être remis, particulièrement la valeur de charge mémorisé au pixel (22), à une valeur prédéterminé, la cas échéant entachée de bruit.

**6.** Circuit selon une quelconque des revendications précédentes, **caractérisé en ce, que** le circuit de sélection (1) est réalisé par un multiplexeur (18) et, en aval, un démultiplexeur (19), dans lequel les entrées du multiplexeur (18) ont la fonction des entrées du circuit de sélection (1), et les sorties du démultiplexeur (19) ont la fonction des sorties du circuit de sélection (1), et les deux entrées de commande du multiplexeur (18) et du démultiplexeur (19) ont la fonction comme une entrée commune de commande (17) du circuit de sélection (1) et/ou

- qu'un nombre des interrupteurs (13) au côté d'entrée est prévu, qui correspond au nombre des entrées (11), et le premier raccord d'un chacun des interrupteurs (13) au côté d'entrée est relié à une chacune des entrées (11) du circuit de sélection (1),
- le deuxième raccord de chaque interrupteur (13) au côté d'entrée est relié à une ligne de connexion (15),
- un nombre des interrupteurs (14) au côté de sortie est prévu, qui correspond au nombre des sorties (12), et le deuxième raccord d'un chacun des interrupteurs (14) au côté de sortie est relié à une chacune des sorties (12) du circuit de sélection (1),
- l'autre raccord respectif de chaque interrupteur (14) au côté de sortie est relié à la ligne de connexion (15)
et
- les interrupteurs au côté d'entrée (13) et les interrupteurs au côté de sortie (14) peuvent être commandés ou connectés par une entrée de commande en commun (17) du circuit de sélection (1).

**7.** Circuit selon une quelconque des revendications précédentes, **caractérisé en ce, que**

- le nombre des pixel (22) correspond au nombre des éléments accumulateurs (3) et
- le nombre des (n) entrées (11) du circuit de sélection (1) correspond au nombre des (m) sorties (12) du circuit de sélection, et/ou
- que tous les éléments accumulateurs (3) son construits de la même manière.

**8.** Circuit selon une quelconque des revendications précédentes, **caractérisé en ce, que**

- seulement un seul amplificateur opérationnel (61) ainsi que un seul quatrième interrupteur (67) sont prévus pour la multitude (m) des circuits analogues (6), dans lequel
- le raccord inverseur de l'amplificateur opérationnel (61) est relié à tous les deuxièmes raccords du premier condensateur (62),
- les premiers raccords de tous les premiers interrupteurs (64) sont reliés l'un à l'autre, et le noeud généré par ça forme l'entrée (68) du circuit analogue (6),
- les sorties (69) de tous les circuit analogues (6) sont reliées à la sortie de l'amplificateur opérationnel (61), et ce noeud forme la sortie du circuit analogue (6), dans lequel le multitude (m) des deuxième interrupteurs (65) a la fonction comme le multiplexeur (4).

**9.** Circuit selon une quelconque des revendications précédentes, **caractérisé en ce, que**

- le rapport de la capacité du premier condensateur (62) à la capacité du deuxième condensateur (63) se monte entre 1 :1 et 3:1. le deuxième condensateur (63) ayant toujours la capacité plus petite ou, en maximum, la même capacité.

**10.** Circuit selon une quelconque des revendications précédentes, **caractérisé en ce, qu'**un cinquième interrupteur (60) et un sixième interrupteur (6a) sont prévus pour chaque circuit analogue (6), dans lequel

a) le deuxième raccord du premier interrupteur (64) est relié au premier raccord du cinquième interrupteur (60) et le deuxième raccord du cinquième interrupteur (60) est au potentiel de masse
et
b) le premier raccord du sixième interrupteur (6a) est relié au deuxième raccord du premier interrupteur (64), et le deuxième raccord du sixième interrupteur (6a) est relié à la sortie (69) du circuit analogue (6).

**11.** Circuit selon une quelconque des revendications précédentes, **caractérisé en ce, que** les interrupteurs (13) au côté de l'entrée sont intégrés dans le pixel (22) ou sont disposés en proximité immédiate de ceci, particulièrement sur le substrat porteur du microchip, qui porte le circuit, le cas échéant en aval du pixel (22).

**12.** Circuit selon une quelconque des revendications précédentes, **caractérisé en ce, qu'**un convertisseur analogique-numérique est en aval du circuit.

**13.** Circuit selon une quelconque des revendications précédentes, **caractérisé en ce, qu'**une source de courant (15a) est relié à la ligne de connexion (15).

**14.** Circuit selon une quelconque des revendications précédentes, **caractérisé en ce, que** les interrupteurs (64, 65, 66, 67, 60, 6a) des éléments accumulateurs (3) individuels, les interrupteurs du multiplexeur (4) ainsi que les interrupteurs (13, 14) aux côtés de l'entrée et de la sortie du circuit de sélection (1) sont connectables d'une façon électronique ou électrique et, en particulier, sont développés comme des transistors, préférablement tous d'une manière identique, et le cas échéant en utilisant la technologie CMOS.

**15.** Circuit selon une quelconque des revendications précédentes, **caractérisé en ce, que** les éléments accumulateurs (3), les pixel (22), le circuit de sélection (1) ainsi que le multiplexeur (4) ont une entrée de synchronisation, par laquelle ils sont activés dans des intervalles de temps prédéterminés.

Fig. 1

Fig. 2

Fig. 3

Fig. 4

Fig. 5

Fig. 6

Fig. 7

Fig. 8

Fig. 9c

Fig. 9b

Fig. 9a

26

Fig. 10